(19) Europäisches Patentamt
European Patent Office
Office européen des brevets

(11) **EP 3 104 729 B1**

(12) **EUROPEAN PATENT SPECIFICATION**

(45) Date of publication and mention
of the grant of the patent:
**17.10.2018 Bulletin 2018/42**

(21) Application number: **15707014.5**

(22) Date of filing: **13.02.2015**

(51) Int Cl.:
*A43B 7/12* *(2006.01)*          *A41D 31/02* *(2006.01)*
*A43B 23/02* *(2006.01)*         *A43B 23/04* *(2006.01)*
*A43B 23/07* *(2006.01)*         *B32B 27/32* *(2006.01)*

(86) International application number:
**PCT/US2015/015727**

(87) International publication number:
**WO 2015/123479 (20.08.2015 Gazette 2015/33)**

(54) **CONFORMABLE WATERPROOF BREATHABLE SOCKS AND METHODS THEREFOR**

ANPASSBARE WASSERDICHTE ATMUNGSAKTIVE SOCKEN UND VERFAHREN DAFÜR

CHAUSSETTES ADAPTABLES, ÉTANCHES À L'EAU, RESPIRANTES ET PROCÉDÉS ASSOCIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2014 US 201414181260**

(43) Date of publication of application:
**21.12.2016 Bulletin 2016/51**

(73) Proprietors:
• **W. L. Gore & Associates, Inc.**
**Newark, DE 19711 (US)**
• **W. L. Gore & Associates, GmbH**
**85639 Putzbrunn (DE)**

(72) Inventors:
• **BACINO, John E.**
**Landenberg, PA 19350 (US)**
• **CLOUGH, Norman E.**
**Landenberg, PA 19350 (US)**
• **COLLAZO, Orlando**
**Elkton, MD 21921 (US)**

• **NABERNIK, Stane**
**4000 Kranj (SI)**
• **SHELLEY, Franz J.**
**Oxford, PA 19363 (US)**
• **WOLFRUM, Heike**
**82008 Unterhaching (DE)**
• **ZAGGL, Alexander**
**85653 Aying (DE)**

(74) Representative: **Schmitt-Nilson Schraud Waibel
Wohlfrom
Patentanwälte Partnerschaft mbB
Destouchesstraße 68
80796 München (DE)**

(56) References cited:
EP-A1- 2 161 127          WO-A1-01/12889
WO-A1-2013/087324        US-A- 5 325 541
US-A- 5 526 584          US-A- 5 700 544
US-A1- 2007 124 849      US-A1- 2011 167 677
US-A1- 2011 268 959      US-A1- 2012 201 988

**Description**

FIELD OF THE INVENTION

The present invention relates generally to shoe inserts, and more specifically, to waterproof, breathable booties that are conformable over a range of shoe sizes. Shoe inserts incorporating the booties and methods of making the conformable booties and shoe inserts are provided. Footwear assemblies and waterproof, breathable socks are also provided.

BACKGROUND OF THE INVENTION

Waterproof, breathable footwear is typically formed of an upper material which is both air permeable and water permeable. The outer layer of the upper material may be leather and/or a textile fabric. Waterproofness is achieved through the use of a waterproof, water-vapor permeable functional material that is arranged within the shoe. An example is shown in US 2011/167677 A1. In the footwear art, materials which are both waterproof and water vapor permeable are commonly referred to as "functional" materials. The functional layer may be made of an expanded polytetrafluoroethylene (ePTFE) material available from W. L. Gore and Associates, Inc., Elkton, Md., under the tradename GORE-TEX®. The expanded PTFE is characterized as having a density less than $2.0 \, g/cm^3$. Other functional materials have also been developed and are well known in the art.

It is difficult to sew the functional layer directly to the upper and/or sole material of the footwear. In addition, the functional layer becomes permeable to water when it is pierced during the sewing process. It is therefore common to provide the footwear with a shoe insert containing the functional layer. The shoe insert incorporates several pieces of a laminate that includes the functional layer and a textile material which are assembled and joined to produce an insert that includes laminate panels joined by seams in a manner to have generally the shape of a foot. A waterproof joining process may be accomplished by sewing the individual pieces together and sealing the seams with a superimposed adhesive or sealing tape that is applied to the seam by a bonding or welding process.

The shoe insert is generally attached within the footwear such that the upper end of the shoe insert is connected with the upper end of the footwear by sewing or by an adhesive. The sole portion of the shoe insert is held stationary between the outsole and the insole of the footwear, usually by adhesive bonding over the entire surface.

One problem that often results when forming such waterproof, breathable footwear is that the insertion of the shoe insert often results in a poor fitting shoe (i.e., the shoe insert has a different fit (shape or size) to that of the already sized upper) and/or poor attachment between the shoe insert and the shoe upper material, which results, among other things, in a less than desirable appearance of the inside of the footwear (i.e., the shoe insert appears wrinkled or pulls away from the upper).

An additional problem is that because of the multiple laminate pieces or panels needed for manufacturing an article of waterproof footwear, flexibility may be severely compromised. A further problem is that sealing the seamed portions of the shoe insert to make the shoe waterproof may compromise the breathability and flexibility of the shoe and contribute to the poor fit of the shoe insert.

Thus, there remains a need in the art for a shoe insert that closely conforms to the inside of the shoe, is both waterproof and breathable, and is comfortable to wear.

SUMMARY OF THE INVENTION

According to the invention there is provided a waterproof, breathable sock according to claim 1.

In further embodiments, the present invention allows to provide a bootie that contains a laminate including a conformed ePTFE membrane, a first textile, and, optionally, a second textile. The first textile may form an interior portion of the bootie and the second textile may form an exterior portion of the bootie. The textile is not particularly limited as long as the textile possesses at least some elastic properties. In at least some exemplary embodiments, the conformed ePTFE membrane is seamless. In exemplary embodiments, the first and/or second textile is a sock, which may be tubular in shape. Additionally, the sock may contain heel and/or toe reinforcements. The inclusion of heel and toe reinforcements results in the bootie having a more defined, foot-like shape, which may be self-supporting. In addition, in exemplary embodiments, the conformed ePTFE membrane has a thickness variation from a first location in the bootie to a second location in the bootie of at least 1.2:1. Also, the bootie is free, or substantially free, of wrinkles. The bootie has a generally symmetrical shape. In one embodiment, the ePTFE membrane has a density greater than or equal to about 2.0 g/cm3, which renders the bootie non-breathable but provides the wearer protection from an aggressive environment.

In further embodiments, the present invention allows to provide a shoe insert that includes a laminate that includes (1) a seamless, shaped ePTFE membrane and (2) a textile positioned on one side of the shaped ePTFE membrane. A second textile may be provided on a second side of the shaped ePTFE membrane opposing the textile. The textiles may be a knitted textile tube, a woven textile tube, a tubular sock, or a sock having reinforced heel and/or toe region(s). In addition, the textile possesses at least some elastic properties. The ePTFE membrane has a thickness variation from a first location in the shoe insert to a second location in the shoe insert of at least 1.2:1. Additionally, the shaped ePTFE membrane may have thereon a coating, such as an oleophobic coating and/or an abrasion resistant coating. The shoe insert has generally the shape of the asymmetrical last.

In further embodiments, the present invention allows to provide a footwear article that includes a laminate that includes (1) an upper portion, (2) a shoe insert adjacent to with the upper portion, and (3) a sole portion adjacent to with the upper portion and the shoe insert. The shoe insert includes a seamless, shaped ePTFE membrane, a first textile affixed to one side of the ePTFE membrane, and optionally, a second textile affixed to a second side of the ePTFE membrane. The shaped ePTFE membrane may have a thickness variation from a first location in the shoe insert to a second location in the shoe insert of at least 1.2: 1. The shoe insert may be affixed to the upper portion and/or sole portion of the footwear article or, alternatively, the shoe insert may be removable. There are substantially no air gaps between the upper portion of the footwear article and the shoe insert. Footwear articles including the shoe insert do not demonstrate leaking when filled with water and centrifuged for 30 minutes, thus passing the Centrifuge Waterproofness Test described herein. A polymeric overlay may be positioned on the shoe insert to provide additional cushioning, stability, and/or support. The inclusion of polymeric overlays may permit the "overlayed" shoe insert to be worn in an indoor or outdoor environment without being part of a shoe.

In further embodiments, the present invention allows to provide a waterproof sock that includes a laminate that includes (1) a conformed ePTFE membrane and (2) a first elastic textile affixed to a first side of the conformed ePTFE membrane. The conformed ePTFE membrane has a thickness variation from a first location in the waterproof sock to a second location in the waterproof sock of at least 1.2:1. A second elastic textile may be affixed to a second side of the conformed ePTFE membrane. The textile(s) selection is not particularly limited so long as the textile possesses at least some elastic properties. In at least one embodiment, the textile(s) may be a textile tube, a tubular sock, or a conventional sock with reinforced heel and/or toe regions. The waterproof sock is formed on a symmetrical last, and as a result, the waterproof sock has a generally symmetrical shape. The waterproof sock does not demonstrate leaking when filled with water and centrifuged for 15 minutes, thus passing the Centrifuge Waterproofness Test described herein. In one embodiment, the ePTFE membrane is densified such that the ePTFE membrane has a density greater than or equal to about 2.0 g/ cm3, which renders the sock non-breathable but provides the wearer protection from an aggressive environment. In a further alternative embodiment, a shaped waterproof sock may be formed, or shaped, with the application of heat (e.g., in a conventional oven) on a conventional asymmetrical last to provide the shaped waterproof, breathable sock.

In further embodiments, the present invention to provide a method of forming a shoe insert that includes (1) applying an adhesive to a first side of a textile to form a first composite, (2) positioning the first composite on a symmetrical last with the adhesive facing outwardly and away from the symmetrical last, (3) stretching a conformable ePTFE tape having an extensibility of at least 1.5X in at least one direction over the first composite to form a second composite that includes a conformed ePTFE membrane, the adhesive, and the textile, (4) heating the second composite and the symmetrical last to a temperature from about 50° C to about 200° C to form a bootie, (5) placing the bootie on an asymmetrical last, and (6) heating the bootie and the asymmetrical last to a temperature from about 50° C to about 200° C to form a shoe insert. The shoe insert may be cooled before removing it from the asymmetrical last. In some embodiments, the bootie and/or shoe insert may be heated to a temperature from about 340° C to about 375° C to amorphously lock the ePTFE membrane. The stretching step may include (1) positioning the conformable ePTFE tape over the symmetrical last and (2) rotating the symmetrical last through the conformable ePTFE tape to form the second composite. In the second heating step, the bootie shrinks to fit the asymmetrical last. In an alternative embodiment, the bootie may be made to be somewhat smaller than the asymmetrical last and the bootie is stretched to fit over the asymmetrical last. In some embodiments, the ePTFE membrane may have a thickness variation from a first location in the shoe insert to a second location in the shoe insert of at least 1.2: 1.

In further embodiments, the present invention allows to provide a method of forming a shoe insert that includes (1) applying a first adhesive to a first side of a first textile to form a first composite, (2) positioning the first composite on a symmetrical last with the first adhesive facing outwardly and away from the symmetrical last, (3) stretching a conformable ePTFE tape having an extensibility of at least 1.5X in at least one direction over the first composite to form a second composite comprising a conformed ePTFE membrane, the first adhesive, and the first textile, (4) positioning a second textile having thereon a second adhesive on the second composite such that the second adhesive is located on the ePTFE membrane to form a third composite, (5) heating the third composite and the symmetrical last to a temperature from about 50° C to about 200° C to form a bootie, (6) placing the bootie on an asymmetrical last, and (7) heating the bootie and the asymmetrical last to a temperature from about 50° C to about 200° C to form a shoe insert. The shoe insert may be cooled before removing the shoe insert from the asymmetrical last. In some embodiments, the bootie and/or shoe insert may be heated to a temperature from about 340° C to about 375° C to amorphously lock the ePTFE membrane. As noted earlier herein, in some embodiments, the shoe insert may be seamless. The ePTFE membrane may have a thickness variation from a first location in the shoe insert to a second location in the shoe insert of at least 1.2:1.

The stretching step may include (1) positioning the ePTFE tape over the symmetrical lastand (2) rotating the symmetrical last through the ePTFE tape to form the second composite. Alternatively, the bootie may be made to be somewhat smaller than the asymmetrical last and the bootie is stretched to fit over the asymmetrical last.

In further embodiments, the present invention allows to provide a method of forming a bootie that includes (1) applying an adhesive to a first side of a textile to form a composite, (2) positioning the composite on a symmetrical last with the adhesive facing outwardly and away from the symmetrical last, and (3) stretching a conformable ePTFE tape having an extensibility of at least 1.5X in at least one direction over the composite and the symmetrical last to form a bootie. The bootie is thus formed of a conformed ePTFE membrane, an adhesive, and a textile. In some embodiments, the bootie may be heated to a temperature from about 340° C to about 375° C to amorphously lock the ePTFE membrane. The stretching step may include positioning the ePTFE tape over the symmetrical last and rotating the symmetrical last through the ePTFE tape. In other embodiments, the bootie is stretched over the asymmetrical last.

In further embodiments, the present invention allows to provide a method of forming a shoe insert that includes (1) applying an adhesive on one of a first textile or a side of a conformable ePTFE tape having an extensibility of at least 1.5X in at least one direction, (2) positioning the textile on a symmetrical last, (3) stretching the conformable ePTFE tape over the textile to form a first composite, (4) positioning a second composite including a second adhesive on a second textile on the first composite such that the second adhesive is positioned on the ePTFE membrane to form a bootie, (5) placing the bootie on an asymmetrical last, and (5) heating the bootie and the asymmetrical last to a temperature from about 50 °C to about 200 °C to form the shoe insert. The stretching step may include rotating the symmetrical last through the ePTFE tape. The placing step may include stretching the bootie over the asymmetrical last. The first and second textiles may be a knitted textile tube, a woven textile tube, a tubular sock, or a formed sock having heel and/or toe reinforcements. The shoe insert may be self-supporting, such as, for example when the textile is a formed sock having heel and toe reinforcements.

In further embodiments, the invention allows to provide a method of forming a bootie that includes (1) applying an adhesive on a side of a first textile or a side of a conformable ePTFE tape having an extensibility of at least 1.5X in at least one direction, (2) positioning the textile on a symmetrical last, (3) stretching the conformable ePTFE tape over the textile and symmetrical last to form a first composite, (4) positioning a second composite comprising a second adhesive on a second textile on the first composite such that the second adhesive is positioned on the ePTFE membrane to form a bootie, and (5) heating the bootie to a temperature from about 50 °C to about 200 °C. In some embodiments, the bootie is heated to a temperature from about 340° C to about 375° C to amorphously lock the ePTFE membrane. The bootie has a generally symmetrical shape, and may be breathable over its entirety. In at least one embodiment, the ePTFE membrane has a density greater than 2.0 g/ cm3. The densified ePTFE provides protection against aggressive environments.

In further embodiments, the present invention allows to provide a bootie that is formed of a conformed ePTFE membrane and no textile. The conformed ePTFE membrane may have thereon a coating, such as an oleophobic coating and/or an abrasion resistant coating. Additionally, the conformed ePTFE membrane has a thickness variation from a first location in the bootie to a second location in the bootie of at least 1.2:1. The bootie may be formed by stretching a conformable ePTFE tape over a symmetrical last in a single step. The bootie has a shape substantially similar to the symmetrical last. In addition, the bootie may be heated to a temperature from about 50° C to about 200° C to reduce the ability of the conformed ePTFE membrane to further stretch and/or to deform. The bootie may also, or alternatively, be heated to a temperature from about 340° C to about 375° C to amorphously lock the conformed ePTFE membrane. In one embodiment, the conformed ePTFE membrane has a density greater than or equal to about 2.0 g/ cm3, which renders the bootie non-breathable but provides the wearer protection from an aggressive environment.

In further embodiments, the present invention allows to provide a shoe insert that is formed of a shaped ePTFE membrane and no textile. The shaped ePTFE membrane may have at least one coating layer thereon, such

as, but not limited to, an abrasion resistant coating and/or an oleophobic coating. In one embodiment, the shaped ePTFE membrane has an abrasion resistant coating on at least one of an inner surface of the shoe insert and an outer surface of the shoe insert. The shoe insert may be formed in a one step process whereby a conformable ePTFE tape is stretched over an asymmetrical last. The shoe insert has a shape substantially similar to the asymmetrical last. The shoe insert may be heated to a temperature from about 50° C to about 200° C to reduce the ability of the conformed ePTFE membrane to further stretch and/or to deform. Additionally, the shaped ePTFE membrane may be amorphously locked. In one embodiment, the ePTFE membrane has a density greater than or equal to about 2.0 g/ cm3, which renders the shoe insert non-breathable but provides the wearer protection from an aggressive environment. In a further embodiment, the shoe insert has a polymeric overlay attached thereto to provide additional cushioning, stability, and/or support.

In further embodiments, the present invention allows to provide a shoe insert formed of a seamless, conformed ePTFE membrane. The shoe insert may be formed by stretching a conformable ePTFE tape over a symmetrical last. The shoe insert may be heated to a temperature from about 340° C to about 375° C to amorphously lock the conformed ePTFE membrane. The conformed ePTFE membrane has a thickness variation from a first location in the shoe insert to a second location in the shoe insert of at least 1.2:1. The shoe insert may be breathable over its entirety. Additionally, the shoe insert may be both waterproof and breathable. In at least one embodiment, the shoe insert does not contain a textile and has a shape substantially similar to the symmetrical last.

In further embodiments, the present invention allows to provide a symmetrical shoe last that contains a first portion and a second portion where the first and second portions are substantial mirror images of each other across a generally central axis. The symmetrical shoe last may be formed to have different shapes and/or sizes depending on the end use of the article. In addition, the symmetrical design of the shoe last can be changed to allow for additional shoe construction features, such as additional tongue gusset materials, size, width, shoe types, etc, so long as the symmetry along a centrally located axis remains intact. Thus, the symmetrical last can be customized to meet a variety of shapes and sizes to meet desired end uses.

In further embodiments, the present invention allows to provide a bootie, shoe insert, or waterproof, breathable sock that contains (1) a laminate of a conformed or shaped ePTFE membrane and at least one textile and (2) a second component attached to the bootie, shoe insert, or waterproof, breathable sock, such as with a seam. In exemplary embodiments, the ePTFE membrane is seamless. The second component may be, for instance, a textile, a laminate (e.g., a laminate including a polymer membrane), a textile laminate, a polymer membrane (e.g. polytetrafluoroethylene or expanded polytetrafluoroethylene), or a second conformed or shaped ePTFE membrane different from the first conformed or shaped ePTFE membrane (e.g., having a characteristic or property different from the first conformed or shaped ePTFE membrane) in the bootie, shoe insert, or waterproof, breathable sock. The selection of the second material is not particularly limited, and may be selected depending on the desired quality or property desired. It is to be appreciated that the additional material(s) may be used, for example, to tailor the bootie, shoe insert, or waterproof, breathable sock to achieve desired properties and/or a desired appearance.

In further embodiments, the present invention allows to provide a hybrid bootie, shoe insert, or sock where a portion of the bootie, shoe insert, or sock is removed and the partial bootie, shoe insert, or sock is attached to a second component. The second component may be attached to the partial bootie, shoe insert, or sock by at least one seam. In one embodiment, the bootie, shoe insert, or waterproof, breathable sock may be cut or otherwise portioned and that portioned piece of the bootie, shoe insert, or waterproof, breathable sock may be attached to the second component.

In further embodiments, the present invention allows to provide a bootie, shoe insert, or waterproof, breathable sock that includes a conformed ePTFE membrane that contains at least one integrally joined interface, and optionally, at least one textile. In some embodiments, a second component may be attached to the bootie, shoe insert, or waterproof sock (or a portion thereof) by any conventional methods, such as by a seam.

In further embodiments, the present invention allows to provide a bootie, shoe insert, or waterproof, breathable sock that contains a laminate of a seamless conformed or shaped ePTFE membrane and at least one textile where a portion of the laminate is removed and the partial laminate is affixed to at least one second component.

It is an advantage of the present invention that the ePTFE membrane in the bootie, shoe insert, and waterproof sock may be seamless.

It is another advantage of the present invention that shoes made with shoe inserts having a seamless, shaped ePTFE membrane have enhanced breathability over shoes made with conventional shoe inserts made by sewing together pieces of laminate material and sealing by a bonding or welding process.

It is yet another advantage of the present invention that the shoe inserts conform closely to the inside of the shoe, thereby reducing and even eliminating air gaps between the insert and the shoe.

It is a further advantage of the present invention that the bootie is conformable over a range of shoe sizes and shapes.

oties made with seam tape.

It is also an advantage of the present invention that the sole portion of the shoe may have breathability.

It is yet another advantage of the present invention that a shoe insert having a seamless, shaped ePTFE membrane contains little or no wrinkles, which increases wear comfort for the user.

It is a feature of the present invention that the bootie conforms in a thermal heating step to shrink to fit a conventional asymmetrical last over a range of sizes.

It is yet another feature of the present invention that the bootie can be stretched to fit a conventional asymmetrical last over a range of sizes.

It is also a feature of the present invention that a polymeric overlay may be positioned on a bootie, shoe insert, or waterproof, breathable sock to provide additional cushioning, stability, and/or support.

It is another feature of the present invention that the inclusion of polymeric overlays on the shoe insert permits the "overlayed" shoe insert to be worn in an indoor or outdoor environment without being part of a shoe.

It is a further feature of the present invention that the textile used to form the shoe insert may be a conventional sock, a knitted textile tube, or a woven textile tube.

It is yet another feature of the present invention that the reduction or elimination of air gaps between the insert and the shoe reduces water pick up.

It is also a feature of the present invention that the conformed or shaped ePTFE membrane may be densified such that the conformed or shaped ePTFE membrane has a density greater than or equal to about 2.0 g/cm$^3$, which renders the bootie, shoe insert, or sock non-breathable but provides the wearer protection from an aggressive environment.

It is another feature of the present invention that the seamless booties, shoe inserts, and socks are breathable over their entireties.

It is another feature of the present invention that the lack of seam tape on the shaped ePTFE membrane within the shoe insert reduces the weight of the insert compared to conventional inserts or booties made with seam tape.

## DEFINITIONS

The term "conformable ePTFE tape" as used herein is meant to describe an ePTFE structure that is extendable or extensible in a first direction, which recovers in a second direction perpendicular to the first direction, and which is elongated to conform to the shape of a three dimensional object without fracturing, tearing, or otherwise breaking.

The term "extensibility" as used herein is meant to define the capability of the ePTFE tape to elongate or stretch.

The term "ePTFE membrane" as used herein with respect the formation of the booties, shoe inserts and socks described herein, is meant to describe a conformable ePTFE tape that has been stretched or expanded over a three dimensional object and which substantially maintains the three dimensional shape of the object. It is to be understood that the "ePTFE membranes" described herein are porous and have a microstructure of nodes interconnected by fibrils.

As used herein, the terms "sock", "bootie", and "shoe insert" are meant to describe footwear articles that encase the foot of the wearer.

The term "conformed" as used herein is meant to describe footwear articles (e.g., sock, bootie, or shoe insert) comprising an ePTFE membrane, or an ePTFE membrane, having substantially the shape of a symmetrical last or a portion thereof.

The term "shaped" as used herein is meant to describe footwear articles (e.g., sock, bootie, or shoe insert) comprising an ePTFE membrane, or an ePTFE membrane, having substantially the shape of an asymmetrical last or a portion thereof.

As used herein, the term "textile" is meant to denote any woven, nonwoven, felt, knit, stretch spunbond nonwoven, stretch needlepunched non woven, stretch spunlace non-woven, or fleece and can be composed of natural and/or synthetic fiber materials and/or other fibers or flocking materials that has at least some elastic properties.

The term "elastic" as used herein is meant to denote that the material has stretch characteristics and can be tensioned; and, upon the release of tension, the material returns to its approximate original dimensions.

The term "highly elastic" or "high elasticity" as used herein is meant to describe materials that have stretch characteristics and can be tensioned at least about 50% (or greater); and, upon the release of tension, the material returns to its approximate original dimensions.

The term "seam" or "seamed" as used herein is meant to include the joining of two portions, regions, or materials. A seam may join similar or identical materials or two or more dissimilar materials (e.g. dissimilar textile pieces or a laminate to a shoe insert). The terms "seam" and "seamed" are not intended to be limited to stitching and/or sewing. "Seam" and "seamed" as used herein are meant to include any suitable means of joining two portions regions, or materials, such as by adhesives, bonding, welding, laminating, and the like.

The term "integrally joined interface" is meant to describe the joining or attachment of a conformed or shaped ePTFE membrane to itself (*i.e.*, the same conformed or shaped ePTFE membrane), such as when the conformed or shaped ePTFE membrane has been folded, cut, torn, slit, punctured, or otherwise damaged. The joining or attachment of the conformed or shaped ePTFE membrane to itself may be accomplished by any suitable means of attachment, such as, for example, sewing, stitching, gluing, stapling, patching, etc.

The phrase "waterproof sock" is meant to describe a seamless waterproof sock made in accordance with the methods described herein.

The phrase "hybrid shoe insert" as used herein is meant to describe a shoe insert that has included therein one or more region(s) that has a different function(s) or different material(s) from the shoe insert.

The phrase "hybrid bootie" as used herein is meant to describe a bootie that has included therein one or more region(s) that has a different function(s) or different material(s) from the bootie.

The phrase "hybrid sock" as used herein is meant to describe a sock that has included therein one or more region(s) that has a different function(s) or different material(s) from the sock.

The tern "waterproof" as used herein is meant to define a bootie, shoe insert, shoe, or sock that meets the Waterproof Centrifuge Tests described herein.

The term "self-supporting shoe insert" as used herein is meant to describe a shoe insert that maintains an upright, substantially vertical orientation with respect to a horizontal surface without any external support.

The term "self-supporting bootie" as used herein is meant to describe a bootie that maintains an upright, substantially vertical orientation with respect to a horizontal surface without any external support.

The term "self-supporting sock" as used herein is meant to describe a sock that maintains an upright, substantially vertical orientation with respect to a horizontal surface without any external support.

The term "thickness variation" as used herein is meant to describe a ratio of the difference in thickness of the ePTFE membrane at a first position compared to a second position.

The term "amorphously locked" as used herein is meant to define an ePTFE membrane that has been heated above the crystalline melt temperature of the PTFE.

The term "on" as used herein is meant to denote that when an element is "on" another element, it can be directly on the other element or intervening elements may also be present.

The terms "adjacent" and "adjacent to" as used herein are meant to denote that when an element is "adjacent" to another element, the element may be directly adjacent to the other element or intervening elements may be present.

The term "over" as used herein is meant to denote that when an element is "over" another element, it can be directly over the other element or intervening elements may also be present.

The terms "additional component" or "second component" as used herein are meant to describe any material, such as a textile, a laminate (e.g. including a polymer membrane), a textile laminate, a polymer membrane (e.g., polytetrafluoroethylene or expanded polytetrafluoroethylene), a second conformed or shaped ePTFE membrane different from the first conformed or shaped ePTFE membrane (e.g., having a characteristic or property different from the first shaped ePTFE membrane), that is attached by at least one seam to a bootie, shoe insert, or breathable sock described herein.

## BRIEF DESCRIPTIONS OF FIGURES

The advantages of this invention will be apparent upon consideration of the following detailed disclosure of the invention, especially when taken in conjunction with the accompanying drawings wherein:

FIG. 1 is a schematic illustration depicting a cross section of a laminate forming a 2-layer shoe insert in accordance with the present invention having one textile layer;

FIG. 2 is a schematic illustration depicting a cross section of a laminate forming a 3-layer shoe insert according to the present invention where two textile layers are utilized;

FIG. 3A is a schematic illustration of a symmetrical last according to at least one embodiment of the invention;

FIG. 3B is a schematic illustration of the top view of the symmetrical last of FIG. 3A showing an axis of symmetry;

FIG. 4A is a schematic illustration of a conventional asymmetrical last;

FIG. 4B is a schematic illustration of the top view of the asymmetrical last of FIG. 4A showing no axis of symmetry;

FIG. 5 is a schematic illustration of a three-dimensional scan of the cross-section of a shoe containing the shoe insert according to at least one embodiment of the invention taken at a position 3 cm from the end of the toe area of the shoe;

FIG. 6 is a schematic illustration of a three dimensional scan of the cross-section of the shoe depicted in FIG. 5 with an artificial foot insert positioned therein;

FIG. 7 is a schematic illustration of a three-dimensional scan of the cross-section of a shoe containing a conventional shoe insert taken at a position 3 cm from the end of the toe area of the shoe;

FIG. 8 is a schematic illustration of a three-dimensional scan of the cross-section of the conventional shoe depicted in FIG. 7 containing therein an artificial foot insert;

FIG. 9 is a schematic illustration of a heel and toe reinforced shoe insert;

FIG. 10 is a schematic illustration of a cross-section of a shoe insert within a shoe comprising an upper and a sole;

FIG. 11 is a schematic illustration of a hybrid shoe insert according to one exemplary embodiment of the present invention;

FIG. 12 is a scanning electron micrograph (SEM) of the cross-section of the right upper portion of the shoe of Example 5 taken at 300X magnification;

FIG. 13 is a scanning electron micrograph of the cross-section of toe portion of the shoe of Example 5 taken at 300X magnification;

FIG. 14 is a cross-sectional schematic illustration of a shoe insert having thereon polymeric overlays;

FIG. 15 is a cross-sectional schematic illustration of a partial shoe insert attached to an insole board;

FIG. 16 is a cross-sectional schematic illustration of a hybrid shoe insert;

FIG. 17 is a cross-sectional schematic illustration of a hybrid shoe insert position in a woman's dress shoe;

FIG. 18 is a cross-sectional schematic illustration of a shoe insert having therein a tear in the ePTFE membrane that has been repaired by stitching the ePTFE membrane together;

FIG. 19 is a cross-sectional illustration of a hybrid shoe insert having therein a cut that has been repaired by gluing the ePTFE membrane; and

FIG 20 is a cross-sectional illustration of a shoe insert where a damaged section of the shoe insert has been repaired by placing a patch on the shoe insert.

## DETAILED DESCRIPTION OF THE INVENTION

The present invention relates to three dimensional waterproof, breathable, and conformable booties and shoe inserts formed from the conformable booties, as well as footwear articles incorporating the shoe inserts therein. The present invention also relates to three dimensional waterproof, breathable socks. In exemplary embodiments, the booties, shoe inserts, and waterproof, breathable socks include a seamless ePTFE membrane and optionally, at least one textile. The bootie is conformable over a range of sizes and shoe shapes (*e.g.*, right and left). For instance, the bootie may be shaped to fit numerous sizes and shapes (*e.g.*, right and left) of shoe lasts, thereby eliminating the need to have multiple sizes of shoe inserts correlating to particular shoe sizes. The bootie may shrink to fit, or, alternatively, be stretched to fit, a last having a desired size to form a shoe insert. The shoe insert reduces or eliminates the need for a waterproof seam tape, which is conventionally used to make shoe inserts waterproof. It is to be appreciated that the terms "shoe" and "boot" as used herein is meant to include men's, women's, and children's shoes (casual, dress, and running) and boots, respectively.

The conformable ePTFE tape used in forming the booties, shoe inserts, and waterproof socks described herein is capable of elongating or stretching in a first direction and recovering in a second direction that is perpendicular to the first direction. The conformable ePTFE tape has an extensibility in the first direction from about 1.5X to about 140X. In some embodiments, the conformable ePTFE tape has an extensibility in the first direction greater than about 3X, greater than about 10X, greater than about 30X, greater than about 40X, greater than about 50X, greater than about 60X, greater than about 70X, greater than about 80X, greater than about 90X, greater than about 100X, greater than about 110 X, greater than about 120X, greater than about 130X, greater than about 140X, or even greater. The extensibility of the conformable ePTFE tape may range from about 3X to about 130X, from about 10X to about 120X, or from about 50X to about 100X. The conformable ePTFE tape may or may not be heated prior to elongation or stretching. Additionally, the conformable ePTFE tape may be elongated or stretched over a three dimensional object to conform to the shape of a three dimensional object without fracturing, tearing, or otherwise breaking.

One suitable example of a conformable ePTFE tape for use herein is a conformable expanded polytetrafluoroethylene (ePTFE) tape, such as an ePTFE tape made in accordance with the teachings of U.S. Patent No. 7,306,729 to Bacino, *et al*, and described in detail in the Examples set forth below. It is envisioned that other suitable conformable microporous ePTFE tapes having an extensibility of at least 1.5X in at least one direction may be utilized in forming the booties, shoe inserts, and waterproof socks, and would be easily identifiable by those of skill in the art. The pores of the conformable ePTFE tape may be sufficiently tight so as to provide waterproofness, yet sufficiently open to provide properties such as moisture vapor transmission and the penetration by coatings of colorants and oleophobic or other compositions. The conformable ePTFE tape may be deformed at room temperature, or upon the application of heat, into an ePTFE membrane having a three-dimensional shape. It is to be understood that the ePTFE membranes described herein are porous and are characterized by a microstructure of nodes interconnected by fibrils.

Expanded polytetrafluoroethylene (ePTFE) is described herein as an exemplary embodiment, but it is to be appreciated that expanded PTFE, expanded modified PTFE, and expanded copolymers of PTFE are all considered to be within the purview of the invention, and are all considered to be within the meaning of ePTFE as used herein. Patents have been filed on expandable blends of PTFE, expandable modified PTFE, and expanded copolymers of PTFE, such as U.S. Patent No. 5,708,044 to Branca; U.S. Patent No. 6,541,589 to Baillie; U.S. Patent No. 7,531,611 to Sabol et al.; U.S. Patent Application No. 11/906,877 to Ford; and U.S. Patent Application No. 12/410,050 to Xu et al.

In addition, the incorporation of filler materials in various forms within the conformable ePTFE tape and/or ePTFE membranes is also considered to be within the purview of the invention. Non-limiting examples of suitable filler materials include carbon black, aerogels, metals, semi-metals, ceramics, carbon/metal particulate blends, activated carbon, and the like. Filler materials may be incorporated into the ePTFE tape and/or ePTFE membrane by conventional methods, such as those described in U.S. Patent No. 4,995,296 to Mortimer, Jr.

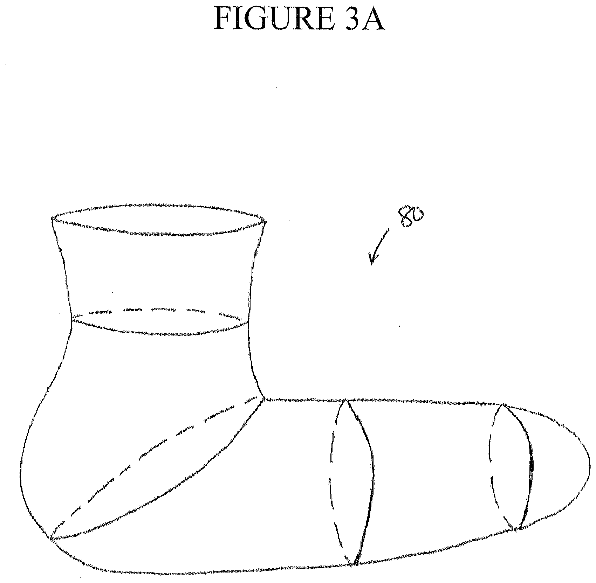

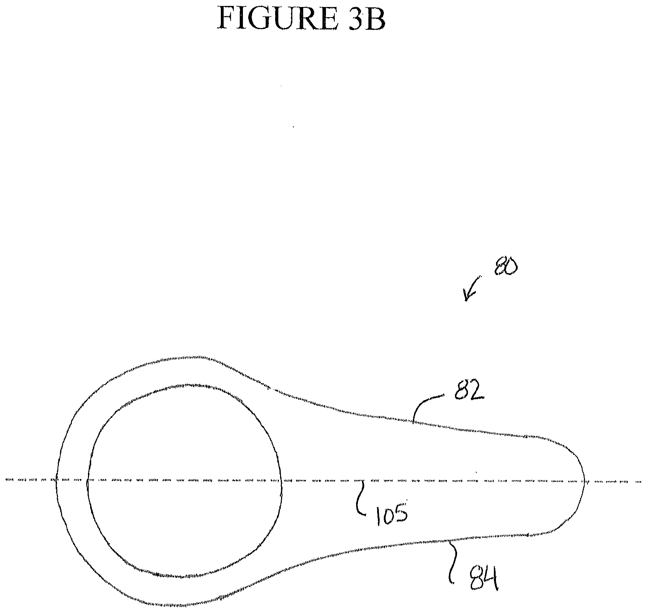

To minimize membrane variability during the formation the shoe insert, a symmetrical foot last may be utilized. A schematic illustration of a symmetrical last 80 is depicted in FIGS. 3A and 3B. The last 80 may be formed of virtually any material, such as, for example, a polymer (*e.g.*, nylon) or a metal (*e.g.*, aluminum materials). A silicon coating, or other suitable coating, may be applied to act as a release liner. Unlike conventional lasts, the symmetrical last 80 has no left or right features or designations. As shown in FIG. 3B, the symmetrical last 80 is symmetrical along a centrally located axis represented by reference numeral 105. Thus, the portions 82 and 84 on either side of the centrally located axis 105 are mirror images, or substantially mirror images of each other. It is to be appreciated that the symmetrical last 80 may be formed to have different shapes and/or sizes depending on the end use of the article. For example, a shoe insert for a running shoe and a shoe insert for a casual shoe may be made using different symmetrical lasts due to the different and specific needs of the two shoe types. Additionally, the symmetrical design of the last can be changed to allow for additional shoe construction features, such as, for example, additional tongue gusset materials, size, width, shoe types, etc, so long as the symmetry along a centrally located axis remains intact. The symmetrical last 80 can therefore be customized to meet a variety of shapes and sizes to meet desired end uses.

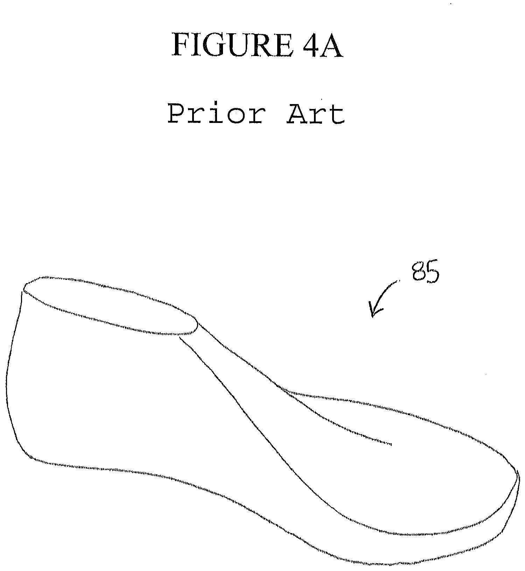

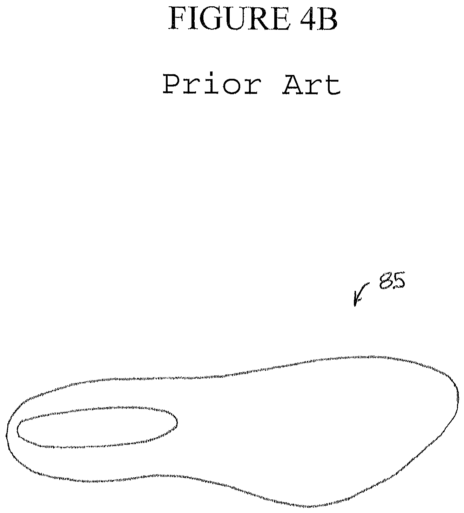

Additionally, the symmetrical last 80 minimizes and even avoids material stress peaks and subsequent membrane thinning and fracture during the formation of booties, socks, and shoe inserts that would result from a traditional asymmetrical foot-shaped last 85, such as is depicted in FIGS. 4A and 4B. Such a foot-shaped last is conventionally used in shoe construction processes contains distinctive left and right features and/or left and right foot designations. A symmetrical shoe insert with no left or right bias, such as is shown in FIGS. 3A and 3B, produces a suitable precursor for the subsequent thermal conformation processes taught herein.

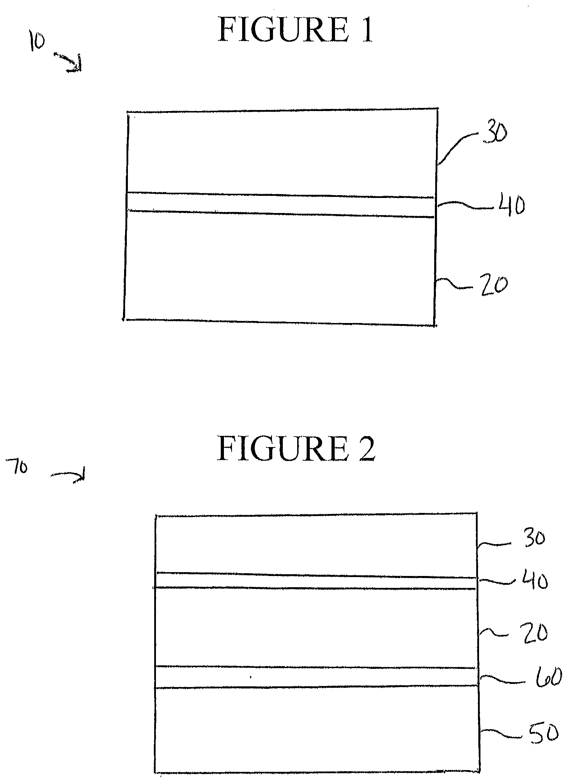

Turning to FIG. 1, a schematic, cross-sectional view of a waterproof, breathable laminate 10 having a seamless, conformed ePTFE layer 20, an adhesive layer 40, and a textile layer 30 can be seen. The terms "textile(s)" and "textile layer(s)" may be used interchangeably herein. In forming the laminate 10 of a 2-layer article, an adhesive 40 may be applied to one side of a textile 30, and the textile/adhesive composite may be positioned on a symmetrical last 80 with the adhesive side facing outwardly, *i.e.,* away from the last. It is to be noted that positioning the textile on the symmetrical last 80 prior to applying the adhesive 40 to the textile 30 is within the scope of the invention. Alternatively, the adhesive 40 may be positioned on a side of a conformable ePTFE tape and the ePTFE tape positioned such that the adhesive 40 faces the textile 30 on the symmetrical last 80.

The adhesive may be applied discontinuously or continuously, provided that breathability through the laminate is maintained. For example, an adhesive may be applied in the form of discontinuous attachments, such as by discrete dots or in a grid pattern, or in the form of an adhesive web to adhere the layers of the laminate together. Alternatively, a breathable adhesive may be applied in a continuous manner to form a layer of adhesive to adhere the layers of the laminate together. The adhesive may be a layer of a thermo-activatable adhesive where activation of the adhesive can be affected by a heating device. Although the use of adhesives is described herein with respect to joining (*e.g.,* laminating) the textile layer to the ePTFE tape, it is to be noted that any suitable process may be used, such as stitching, sewing, gluing, ultrasonic bonding, radio frequency welding, flame bonding, heat sealing gravure lamination, fusion bonding, spray adhesive bonding, and the like.

The textile used to form the booties, shoe inserts, and waterproof socks may be any textile that is air permeable and breathable and that has at least some elastic properties. Elastic, as used herein, is meant to denote that the material has stretch characteristics and can be tensioned; and, upon the release of tension, the material returns to its approximate original dimensions. When forming a sock, a textile having a high elasticity, or an elasticity of at least about 50% , at least about 75%, or at least about 100% or greater. The term "highly elastic" as used herein is meant to describe materials that have stretch characteristics and can be tensioned at least about 50% (or greater); and, upon the release of tension, the material returns to its approximate original dimensions.

The textile may be comprised of materials such as, but not limited, to cotton, rayon, nylon, polyester, silk, lycra, spandex, elastane, and blends thereof. The weight of the material forming the textile is not particularly limited except as required by the application. In some embodiments, the textile may impart sufficient abrasion resistance to the laminate to provide adequate protection for the wearer of the article of footwear. Also, the textile may have a soft hand so that the wearer of the footwear article is comfortable.

In exemplary embodiments, the textile is a commercially available sock or a textile tube (*e.g.,* knitted or woven textile tube). The sock or textile tube may be formed of virtually any material or combination of materials as long as the sock or textile tube is elastic or has at least some elastic characteristics. In addition, the sock may be tubular or generally tubular in shape, or may have a formed shape that is generally in the shape of a foot. Such formed-shape socks may also have reinforced areas, such as in the toe and/or heel regions. The inclusion of heel and toe reinforcements results in the bootie and/or shoe insert having a more defined, foot-like shape. The bootie, shoe insert, and waterproof, breathable sock, may therefore have an upper portion, a heel portion, a toe portion, and a sole portion.

After the adhesive 30 is applied to either the textile 30 or to the conformable ePTFE tape, or both, the conformable ePTFE tape is stretched over the symmetrical last 80. In exemplary embodiments, the symmetrical last 80 is attached to a rotatable arm and the last 80 is rotated to move the last 80 through the conformable ePTFE tape, which stretches the conformable ePTFE tape over the last 80 and into a seamless, conformed ePTFE membrane 20 having the general shape of the symmetrical last 80. The adhesive may be a continuous breathable adhesive or a discontinuous adhesive. The ePTFE tape may be held in a fixed orientation relative to the last 80 prior to moving the symmetrical last 80 through the conformable ePTFE tape. In addition, the conformable ePTFE tape may be pre-heated prior to conforming the ePTFE tape over the last 80. It is to be appreciated that other mechanisms may be used to mechanically "push" or otherwise move the symmetrical last 80 through the conformable ePTFE tape. Alternatively, the conformable ePTFE tape may be manually stretched over the symmetrical last 80. At this stage in the process, the last 80 contains thereon the textile 30, adhesive 40, and the seamless, conformed ePTFE membrane 20 (*i.e.,* a 2-layer article).

An abrasion resistant coating may be applied to the ePTFE membrane 20 to protect the seamless, conformed ePTFE membrane 20 from wear and/or damage. In a 2-layer article, an abrasion resistant coating may be applied to the ePTFE membrane 20. In use, the 2-layer article may be positioned such that the coating faces away from the foot (*e.g.,* positioned towards the shoe) or it may be positioned such that the coating faces the foot of the wearer (*i.e.,* positioned away from the shoe). An abrasion resistant coating may also or alternatively be applied to the surface of the textile. The 2-layer article may be positioned such that the coating faces either the shoe or the foot. It is to be appreciated that other coatings (*e.g.,* colorants, oleophobic coatings, etc.) may be applied in addition to, or in place of, the abrasion resistant coating. The coating(s) may be applied to all or part of the surface(s) of the ePTFE membrane or to all or part of the surface(s) of the textile.

In forming laminate 70 shown in FIG. 2, a second adhesive 60 is applied to a second textile 50 and the second textile/adhesive composite is stretched over the symmetrical last 80 with the adhesive positioned on the exposed surface of the ePTFE membrane. Thus, the symmetrical last 80 has thereon the first textile 30, the first adhesive 40, a seamless, conformed ePTFE membrane 20, the second adhesive 60, and the second textile 50 (*i.e.,* the 3-layer article). It is to be understood that the textile layer 50 and adhesive layer 60 may be the same as, or different from, the textile layer 30 and adhesive layer 40 of laminate 10. Additionally, it is to be appreciated that laminates 10, 70 may contain any number of layers as long as the laminate meets the performance properties described herein.

In the 3-layer article an abrasion resistant coating may be applied to all or part of the surface of the first and/or second textile such that the coating faces the shoe (*i.e.,* positioned away from the foot). The coating may also or alternatively be applied to all or part of the surface of the first and/or second textile such that the abrasion resistant coating faces the foot (*i.e.,* away from the shoe). Other coatings may be applied in addition to, or in place of, the abrasion resistant coating.

The 2-layer article and the 3-layer article may form a bootie, shoe insert, or a sock, depending, at least in part, on the textile used to form the article. For example, and as discussed below, a tubular shaped sock may be used to form a waterproof sock whereas a reinforced, foot-shaped sock may be used to form a bootie or shoe insert.

The 2-layer article and the symmetrical last 80 or the 3-layer article and the symmetrical last 80, depending on the number of layers desired in the bootie and/or shoe insert, are heated to a temperature from about 50° C to about 200° C or from about 80° C to about 160° C, and generally to about 160° C (with or without vacuum) in a conforming step to set the seamless, conformed ePTFE membrane 20 generally into the shape of the symmetrical last 80 and form a bootie. Accordingly, the bootie may be formed of a conformed ePTFE membrane and at least one textile. In one embodiment, the ePTFE membrane is heated above the crystalline melt point of PTFE, for example to a temperature between about 340° C and 375° C, to "amorphously lock" the ePTFE and prevent further changes in shape and/or size of the bootie, reduce the stretchability of the bootie, and provide stability to the bootie.

The temperature in the conforming step is ultimately dependent upon the adhesive(s) utilized, and should not be so high as to degrade and/or render useless any portion of the bootie, shoe insert, or waterproof sock described herein. Additionally, the conforming step adheres the textile layer(s) to the ePTFE membrane 20, particularly when a vacuum is utilized. The heating may occur in a conventional oven, an air circulating oven, or the like. It is to be appreciated that the 2-layer article or 3-layer article may be heated in the absence of the symmetrical last 80, or partially heated while positioned on the symmetrical last 80, with the remainder of the heating occurring in the absence of the symmetrical last 80 to conform the seamless, conformed ePTFE membrane 20, so long as the 2-layer article or 3-layer article does not lose the general shape of the symmetrical last 80.

Regardless of the number of ePTFE layers 20, textile layers 30, 50, or adhesive layers 40, 60 present in laminates 10, 70, the number of additional layers added, or the mechanism for bonding the materials together, the booties described herein will contain certain properties. For example, a bootie will have a breathability of at least 3 g/hr, at least 5 g/h, at least 10 g/hr, at least 20 g/hr, or even at least 30 g/hr, or greater. Additionally, the bootie is advantageously shapeable over a range of shoe sizes and shapes of lasts (*e.g.,* left or right). Thus, booties according to the present invention can be manufactured as one size and be shrunk (or stretched) to fit a variety of shoe sizes, including men's, women's, and children's sizes.

After the bootie has been formed, it is removed from the symmetrical last 80 and loosely placed on a conventional asymmetrical last 85, which has left and right foot characteristics. The bootie and asymmetrical last 85 are then subjected to a shaping step where the bootie and asymmetrical last 85 are heated to a temperature from about 50° C to about 200° C for about 5 min to about 30 min. The bootie and the asymmetrical last 85 may be heated in a conventional oven, an air circulating oven, or the like. During this thermal dwell, the bootie "shrinks" and closely shapes to the shape and size of the conventional asymmetrical last 85, forming a smooth and close fitting shoe insert to that of the conventional last. In some embodiments, the ePTFE membrane "amorphously locked" by heating the ePTFE from about 340° C and 375° C to prevent further changes in shape and/or size of the shoe insert and reduce the stretchability of the shoe insert. The shoe insert on the conventional last 85 shows little-to-no wrinkles and has little, if any, excess material. After the heating is complete, the last 85 and shoe insert are removed from the heat and allowed to cool, generally to a temperature less than about 50° C. The shoe insert may then be removed from the last. The shoe insert may also be permitted to cool prior to removing the shoe insert from the asymmetrical last 85. The shoe insert is thus formed of a seamless, shaped ePTFE membrane with at least one textile.

In an alternate embodiment, the bootie is formed to have a size somewhat smaller than the size of the asymmetrical last 85, and is stretched to fit the asymmetrical last 85, with or without the application of heat, and optionally in a vacuum. It is to be appreciated that the bootie can be stretched to fit lasts over a large range of shoe sizes, such as from a woman's sized shoe last to a men's sized shoe last.

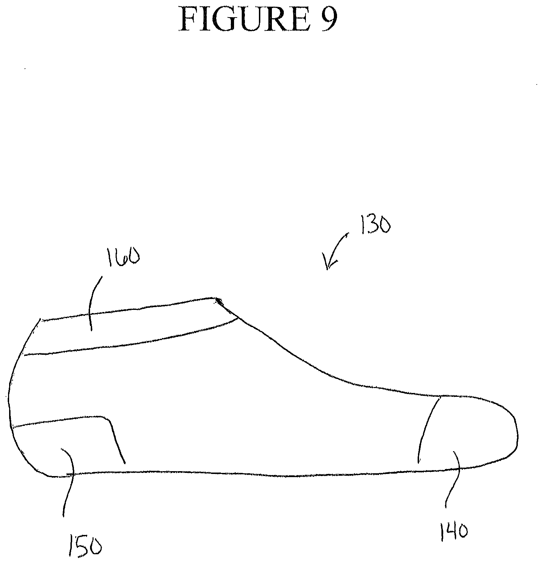

The booties and shoe inserts may be self-supporting and maintain the three-dimensional shape of the last even after the shoe insert is removed from the last. By self-supporting, it is meant that the bootie or shoe insert (or waterproof, breathable sock described below) maintains an upright, substantially vertical orientation without any external support. By substantially vertical orientation, it is meant to describe a bootie or shoe insert that has an upright, vertical orientation or a nearly upright, vertical orientation. This is especially the case when a heel and/or toe reinforced sock is used to form the bootie and/or shoe insert. A schematic depiction of a heel and toe reinforced shoe insert is shown in FIG. 9. As shown, the shoe insert 130 has a toe-reinforced portion 140 and a heel-reinforced portion 150. The collar 160 and the upper portion 155 of the shoe insert 130 are also depicted to achieve a general depiction of the sock as a whole. It is to be noted that the lines drawn within the shoe insert 130 are to illustrate the general area that makes up the toe-reinforced portion 140, the heel-reinforced portion, and the collar 160, and it not to be construed as a seam of any kind.

Additionally, the thickness of the conformed or shaped ePTFE membrane varies within the shoe insert, bootie, and waterproof sock (discussed below). Using the shoe insert 130 depicted in FIG. 9 merely as an illustrative example, the thickness of the shaped ePTFE membrane measured at the heel portion 150 may be different than the thickness measured at the toe portion 140 of the shoe insert 130. Similarly, the thickness of the shaped ePTFE membrane at the heel portion 150 may be different than the thickness measured at the upper portion 155 of the shoe insert 130.

The ratio of the thickness variation of the conformed or shaped ePTFE membrane within the shoe insert, bootie, or waterproof sock ranges from 1.2:1 to 5:1, from 1.25:1 to 5:1, from 1.3:1 to 5:1, from 1.5:1 to 5:1, from 2:1 to 5:1, from 2:1 to 4:1, or from 2:1 to 3.1, depending upon the locations selected within the shoe insert, bootie, or waterproof sock. In exemplary embodiments, the thickness variation of the conformed or shaped ePTFE membrane from a first location to a second location in the shoe insert, bootie, or waterproof sock is at least 1.2:1, at least 1.25:1, at least 1.5:1, at least 2:1, at least 2.1:1, at least 2.5:1, at least 3:1, at least 4:1, or at least 5:1 or even greater. The thickness is measured from one side of the ePTFE membrane to the other side of the ePTFE membrane. It is notable that the side portions and tongue portion of the shoe insert tend to have a thicker ePTFE membrane compared to other parts of the shoe insert, even though the side portions and tongue portion of the shoe insert receive the most stretching over the symmetrical last.

The shoe insert may be used in the formation of footwear articles, such as shoes and boots. A shoe or boot containing the shoe insert may be formed in any manner known to those of skill in the art. It is to be noted that all standard and/or conventional methods of making and/or assembling footwear articles as known by those of skill in the art may be utilized, and are considered to be within the scope of the invention. For instance, molding pressing, gluing, stitching, fusion welding, fusion bonding, compression molding, upper bonding, ultrasonic welding, a well as any conventional or commercial tooling are considered to be within the purview of the invention.

In one embodiment, natural or synthetic upper materials may be stitched together to form a shoe upper. Toe and heel protectors may then be attached to the shoe upper. A shoe insert may then be attached to the shoe upper by stitching and/or adhering the shoe insert to the collar portion of the upper of the shoe. The synthetic upper materials and stitched/adhered shoe insert may then be then repositioned onto a conventional asymmetric last where a rubber adhesive is placed on the heel, toe, and sole areas. Any suitable adhesive, such as a solvent based chloroprene rubber adhesive, may be used as the adhesive. It is to be appreciated that a shoe may be made by placing the shoe insert into a shoe without any adhesive so that the shoe insert may be easily removed from the shoe if needed.

A protective layer, such as an ethylene vinyl acetate (EVA) layer, may be adhered to an additional component (*e.g.*, an insole board) with the previously applied rubber adhesive. The protective layer may also, or alternatively, be attached to the sole of the shoe insert. The shoe upper may then be lasted around the shoe insert and attached additional component to form a close fitting shoe insert with the synthetic upper materials. Thus, the shoe insert fits very closely to the contour of the outer portions of the shoe. Finally, a sole (synthetic material, rubber, or other natural material) may be attached to the insole of the shoe insert using another adhesive, such as a solvent based polyurethane adhesive, to complete the waterproof, breathable shoe construction. Shoes made with the shoe insert are highly breathable, and may have a breathability of at least 3 g/hr, or at least 5 g/hr or at least 10 g/hr, or at least 15 g/hr, or at least 20 g/hr, or even at least 30 g/hr, or greater. In one exemplary embodiment, the shoe or boot is made entirely formed of breathable component, thus making the shoe or boot breathable over its entirety. For example, a footwear article formed of an upper portion, a shoe insert, and a sole portion, each of the upper portion, shoe insert, and sole may be breathable.

In another exemplary embodiment, the conformable ePTFE tape may be used to form a waterproof, breathable sock. In particular, a 2-layer or 3-layer article may be made as described in detail above with the exception that the symmetrical last is typically smaller in size than the size of the symmetrical last used to make the bootie and shoe insert described above. The smaller symmetrical last allows the waterproof, breathable sock to maintain at least some elastic characteristics. In exemplary embodiments, the sock(s) utilized to form the waterproof, breathable sock are tubular socks or knitted or woven textile tubes that do not contain toe and heel reinforcements and contain some fibers with high elasticity. Generally, the sock or textile tube used to form the waterproof sock has a higher elasticity than the socks and textile tubes used to form the bootie and/or shoe insert, and may be "highly elastic" and have an elasticity of at least about 50%. It is to be appreciated that socks containing heel and/or toe reinforcements may be utilized to form a waterproof, breathable sock as long as the sock is highly elastic.

In some embodiments, the waterproof breathable sock is typically formed on a symmetrical last to provide conformed waterproof, breathable socks. Additionally, in some embodiments, the waterproof, breathable sock can undergo a shaping step in which the sock is shaped with the application of heat (e.g., in a conventional oven) on a conventional asymmetrical last to form a shaped waterproof, breathable socks. The waterproof, breathable socks typically have greater elasticity than booties or shoe inserts due, at least in part, to the elastic nature of the textile used (e.g. highly elastic sock or highly elastic textile tube). The waterproof, breathable socks have a breathability of at least 3 g/hr, or at least 5 g/hr or at least 10 g/hr, or at least 15 g/hr, at least 20g/h, or even at least 30 g/hr, or greater.

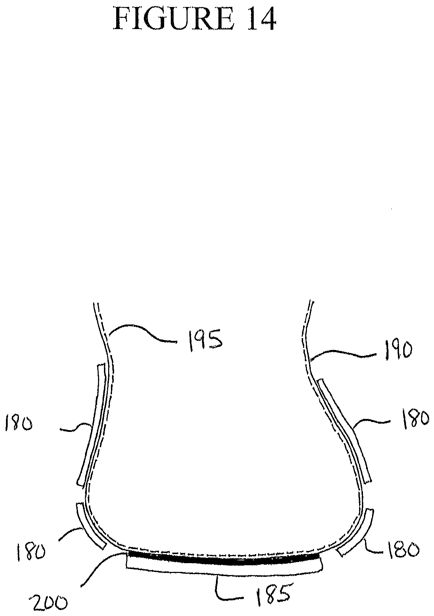

In some embodiments, the bootie, shoe insert, or waterproof, or breathable sock may have thereon a polymeric overlay. The overlay(s) may be attached to the bootie, shoe insert, or waterproof, breathable sock by any suitable means such as, but not limited to, adhering, bonding, or stitching the overlay to the bootie or shoe insert. The application of a polymeric overlay (e.g. a thermoplastic or a thermoset material) may provide additional cushioning and/or support to the bootie, shoe insert, or waterproof, breathable sock. A shoe insert 190 with polymeric overlays 180, 185 is depicted schematically in FIG. 14. The polymeric overlays 180 provide both stability and support to the shoe insert 190. Polymeric overlay 185, which is positioned at the sole of the shoe insert 190, also provides protection to the wearer's foot (indicated by dashed line 195) and a gripping surface for the shoe insert 190. Polymeric overlays 180, 185 may be joined to the shoe (or bootie or waterproof, breathable sock) by any suitable attachment mechanisms, such as, but not limited to a seam 200. The inclusion of polymeric overlays may permit the "overlayed" shoe insert to be worn in an indoor or outdoor environment, without being part of a shoe. Similarly, the presence of a polymeric overlay(s) on a bootie or waterproof, breathable sock provides additional support and/or protection to the bootie or sock and may permit the bootie or sock to be worn in an indoor or outdoor environment without any other laminates or textiles attached thereto or without the bootie being inserted into a shoe.

It is to be appreciated that in an alternative embodiment, laminates 10, 70 may be pre-formed and subsequently and sequentially formed over symmetrical last 80 and asymmetrical last 85 and heated as discussed above to form the bootie and/or the shoe insert, and/or the waterproof, breathable sock.

In a separate embodiment, one or more laminate containing the seamless, shaped ePTFE membrane, such as, for example, laminate 10 or laminate 70, may be used to form a shoe insert. For example, appropriately sized and shaped laminate pieces may be joined at seamed portions to form a shoe inert. The seamed portions may then be rendered waterproof, such as by superimposing a waterproof sealant (e.g., a waterproof adhesive) or by applying a waterproof tape through a bonding or welding process. As one non-limiting example of forming a shoe insert, laminate 10 or 70 may be cut into appropriately sized and shaped pieces and joined to form an upper portion and a sole portion of a shoe insert. The upper portion and the sole portion may be joined in any conventional manner, such as by sewing, welding, or bonding the pieces together. The seams may then be rendered waterproof such as by applying the waterproof adhesive or tape discussed above. Prior to applying any waterproof adhesive or tape, the seamed, laminate shoe insert may be heated in a manner described above in a shaping step to conform to an asymmetrical last 85.

In another embodiment, the conformable ePTFE tape may be stretched over a conventional asymmetric last and formed into a shoe insert in a single step. The shoe insert (either with or without the asymmetrical last) may be heated to a temperature from about 50° C to about 200° C to reduce the ability of the ePTFE membrane to further stretch and/or to deform. The shoe insert may also be heated to a temperature from about 340° C to about 375° C to amorphously lock the conformed ePTFE membrane. The shoe insert of this embodiment is formed of a seamless, conformed ePTFE membrane that has a shape substantially similar to the asymmetric last. In addition, the shoe insert may have one or more polymeric overlay thereon.

In yet another embodiment, a shoe insert having a generally symmetrical shape and which does not contain a textile is formed in a one step process. In this embodiment, the conformable ePTFE tape is stretched over a symmetrical last to form the shoe insert. The shoe insert (either with or without the symmetrical last) may be heated to a temperature from about 50° C to about 200° C to reduce the ability of the ePTFE membrane to further stretch and/or to deform. The shoe insert may additionally, or alternatively, be heated to a temperature from about 340° C to about 375° C to amorphously lock the conformed ePTFE membrane. The shoe insert of this embodiment is a seamless, conformed shoe insert having generally the shape of the symmetrical last. The shoe insert may have one or more polymeric overlay thereon.

In a further embodiment, the conformable ePTFE tape may be stretched over a conventional asymmetric last and made into a shoe insert in two steps (e.g. a conforming and a shaping step). In this particular embodiment, the shoe insert does not contain any textile. For instance, the conformable ePTFE tape may be stretched over a symmetrical last and heated to a temperature (e.g., from about 50° C to about 200° C) in a conforming step to create a seamless, conformed ePTFE membrane having a shape that is generally the shape of the symmetrical last and form a bootie. The bootie may then be positioned over an asymmetrical last and heated (e.g. 50° C to about 200° C) in a shaping step to shrink the ePTFE membrane to fit the asymmetrical last and form a shoe insert. The seamless, shaped ePTFE membrane may be "amorphously locked" by heating the shaped ePTFE membrane to a temperature between about 340° C and 375° C to prevent further changes in shape and/or size of the shoe insert and reduce the stretchability of the shoe insert. The seamless, shaped ePTFE membrane may have a coating thereon, such as, for example, to render the membrane hydrophobic, oleophobic, dimensionally stable, and/or abrasion resistant. Thus, a shoe insert may be made entirely of a seamless, shaped ePTFE membrane. In addition, the shoe insert may have one or more polymeric overlay thereon.

Similarly, a waterproof, breathable sock made entirely of a seamless, conformed ePTFE membrane may be formed by not subjecting the seamless conformed ePTFE membrane to the shaping step. Such a waterproof, breathable sock has a shape substantially similar to the symmetric last. It should be appreciated, however, that shaped waterproof, breathable socks are within the scope of the present invention, as described elsewhere herein.

In a further embodiment, the conformable ePTFE tape may be stretched over a symmetric last and formed into a bootie in a single step. The bootie (either with or without the symmetrical last) may be heated to a temperature from about 50° C to about 200° C to reduce the ability of the ePTFE membrane to further stretch and/or to deform or to a temperature from about 340° C to about 375° C to amorphously lock the conformed ePTFE membrane. The bootie is thus formed of a seamless, conformed ePTFE membrane that has a shape substantially similar to the symmetric last. The bootie may have thereon one or more polymeric overlay.

In another embodiment, a bootie or shoe insert may be formed by positioning a textile/adhesive composite on a symmetrical or an asymmetrical last as described in detail above. Next, a laminate including an ePTFE tape, a second adhesive, and a second textile may be formed. The bootie or shoe insert may be formed by stretching the laminate over the textile/adhesive composite. Additional heating steps as described herein may be conducted to finish forming the bootie or shoe insert.

The booties, shoe inserts, and waterproof, breathable socks described above have continuous, seamless layer(s) of ePTFE. In other words, each conformed or shaped ePTFE membrane in the bootie, shoe insert, or shoe insert is formed of a single conformed or shaped ePTFE membrane. As such, there are no seams in the conformed or shaped PTFE membrane within the booties, shoe inserts, and waterproof, breathable socks. Shoes formed with the shoe inserts are therefore more comfortable to wear, particularly when compared to conventional shoe inserts formed with seamed portions where laminate pieces are attached to each other. As discussed herein, the shoe inserts having therein seamless shaped ePTFE membranes do not form or contain, or only minimally form or contain, folds, wrinkles, or seams that would ultimately compromise the breathability and/or fit of the shoe insert in the shoe.

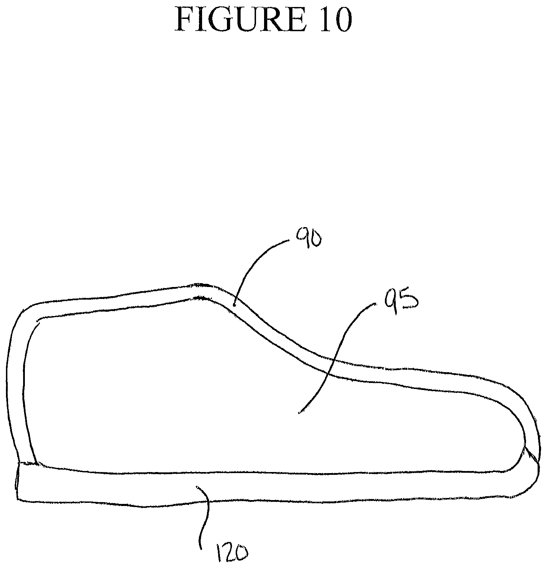

Additionally, booties, shoe inserts, and waterproof, breathable socks having a seamless conformed or shaped ePTFE membrane described herein are highly breathable over the entirety of the bootie, shoe insert, or waterproof, breathable sock, which is at least partially due to the breathable laminate forming the bootie, shoe insert, or waterproof, breathable sock and the lack of seams in the conformed or shaped ePTFE membrane. For example, for a shoe insert having an upper portion, a heel portion, a toe potion, and a sole portion, each of these portions may be breathable. Further, shoe inserts with a seamless, shaped ePTFE membrane demonstrate improved breathability over conventional shoe inserts that are formed of multiple pieces of laminate sewn together, and often sealed with a waterproof tape such as GORE-SEAM® tape (available from W. L. Gore and Associates, Inc.), which is not breathable. A cross sectional schematic view depicting the shoe insert 95 positioned within a shoe containing a shoe upper 90 and a sole 120 is depicted in FIG. 10. It is to be noted that a shoe insert with a seamless shaped ePTFE membrane closely follow the contours of the shoe, leaving little to no space or air gaps between the shoe insert and the shoe.

A second component may be attached to the bootie, shoe insert, or waterproof, breathable sock to form a hybrid bootie, hybrid shoe insert, or hybrid sock. The second component may provide a different function or feature and/or it may be formed of a different material from the bootie, shoe insert, or waterproof, breathable sock. The additional component may be, for instance, a textile, a laminate (e.g., a laminate including a polymer membrane), a textile laminate, a polymer membrane, or a second conformed or shaped ePTFE membrane different from the first conformed or shaped ePTFE membrane (e.g., having a characteristic or property different from the first conformed or shaped ePTFE membrane) in the bootie, shoe insert, or waterproof, breathable sock. The selection of the second component is not particularly limited, and may be chosen depending on the desired quality or property. It is to be appreciated that the second component(s) may be used, for example, to tailor the bootie, shoe insert, or waterproof, breathable sock to achieve desired properties and/or a desired appearance. The second component may be attached to the bootie, shoe insert, or waterproof, breathable sock by any conventional joining or attaching method. Non-limiting examples of such methods include stitching, sewing, gluing, ultrasonic bonding, radio frequency welding, flame bonding, and heat sealing lamination, fusion bonding, spray adhesive bonding, and the like. Further, it is to be noted that the terms "second component" and "second material" may be used interchangeably herein.

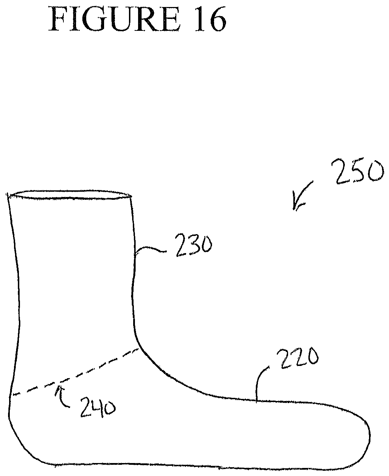

One example of a hybrid shoe insert 250 is depicted in FIG. 16. The depicted hybrid shoe insert 250 includes a shoe insert 220 attached to a second component 230 (*e.g.,* a textile, a laminate, a textile laminate, a polymer membrane, or a second shaped ePTFE membrane) by a seam 240, although, as discussed above, any method for joining the shoe insert 250 to the second component 230 may be utilized. The hybrid shoe insert 250 illustrated in FIG. 16 may be used in the formation of a boot, or in a situation where a portion located above the shoe insert 220 needs (or is desired) to have a functionality or feature that is different from what is provided by the shoe insert 220. It is to be appreciated that any number of portions or seams within the hybrid shoe insert as well as any number of positions for the seams, is considered to be within the purview of the invention.

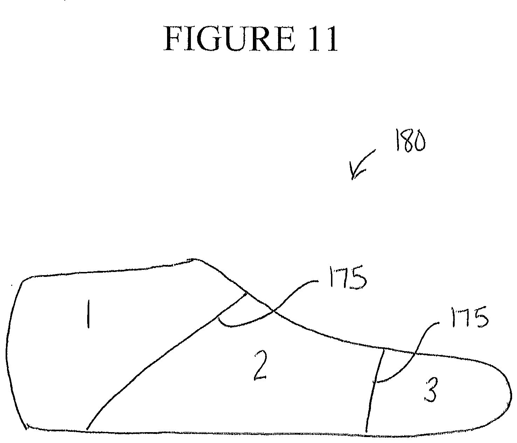

One embodiment containing various portions or regions within a shoe insert is depicted in FIG. 11. The conformed/shaped ePTFE and textile(s) forming the shoe insert may be cut and portion(s) removed therefrom. The portion(s) removed may then be replaced by one or more second component. In another embodiment, the portion that is removed may be attached to at least one second component. The second materials may possess differing characteristics, such as, for example, different breathability and/or different waterproofness and/or different aesthetic appearances. In one or more embodiment, seams may be rendered waterproof by sealing the seams with a waterproof tape (*e.g.,* GORE-SEAM® tape (available from W. L. Gore and Associates, Inc.). It is to be appreciated that the bootie containing one or more seams in FIG. 11 is merely illustrative, and one or more seam may be utilized in the socks and booties described herein in a similar manner.

In FIG. 11, the shoe insert contains two seams 175, which creates three separate "zones" or "regions" (illustrated as 1, 2, and 3, respectively) within the shoe insert. For example, zone 1 may contain the portioned shoe insert, and zones 2 and 3 may each contain a second component. Alternatively, zone 2 shown in FIG. 11 may contain the portioned shoe insert and zones 1 and 3 may each contain a second material. It is to be appreciated that any combination of shoe insert portion(s) and second component(s) are within the purview of the invention. It is also to be understood that any number of zones (and seams) may be present in a hybrid bootie, hybrid shoe insert, or hybrid waterproof, breathable sock, and that such embodiments are considered to be within the purview of the invention. Additionally, the joining mechanisms (*e.g.,* stitching or gluing) may be positioned in locations where the joining mechanism is not likely to interfere with the comfort of the person donning the bootie, shoe insert, or sock.

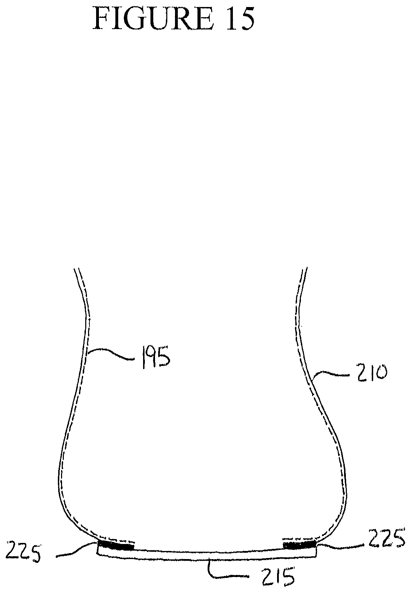

In another embodiment, portions of the shoe inserts described herein may be used in shoe construction. For instance, the sole (bottom portion) of a shoe insert may be removed and the partial shoe insert (*e.g.* upper portion of the shoe insert) may be attached to an additional component (*e.g.* insole board), such as is depicted schematically in FIG. 15. Specifically, FIG. 15 depicts a partial shoe insert 210 (with the sole removed) adhered to an insole board 215 via an adhesive 225. It is to be appreciated that any suitable process for joining the partial shoe insert to the additional component may be used, such as stitching, sewing, gluing, ultrasonic bonding, radio frequency welding, flame bonding, and heat sealing gravure lamination, fusion bonding, spray adhesive bonding, injection molding, and the like. It is to be understood that any portion or part of the bootie or shoe insert may be removed, including removal of one or more layers of the laminate such as by skiving, and that such partial booties and partial shoe inserts are considered to be within the scope of the invention.

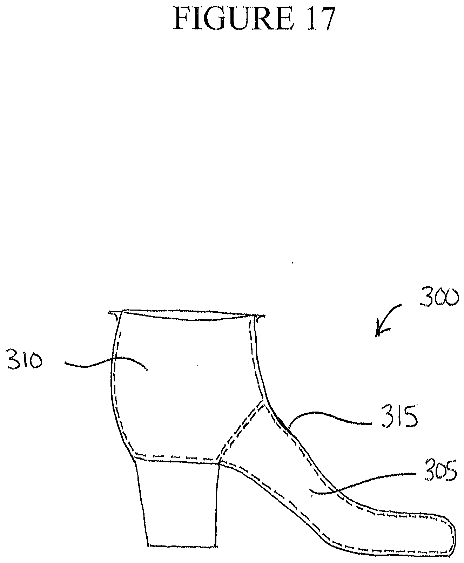

A hybrid shoe insert may be utilized in both men's and women's shoes. One example of a hybrid shoe insert utilized within a woman's shoe is schematically depicted in FIG. 17. In this embodiment, the hybrid shoe insert contains a shoe insert portion 305 and a second component portion 310. Both the shoe insert portion 305 and the second component portion 310 are located within a shoe 300, as depicted by the dashed lines. In this example, the component portion 310 may be formed of a textile, for example, for ease comfort when wearing the shoe 300. Similar to the shoe inserts described above, hybrid shoe inserts fit very closely to the contour of the outer portion 315 of the shoe 300.

It is to be appreciated that although seams are referenced herein with respect to hybrid shoe inserts any of the booties, shoe inserts, or waterproof, breathable socks described herein may contain at least one seam as described above. Any number of seams, as well as any number of regions formed by the seams, are considered within the scope of the invention.

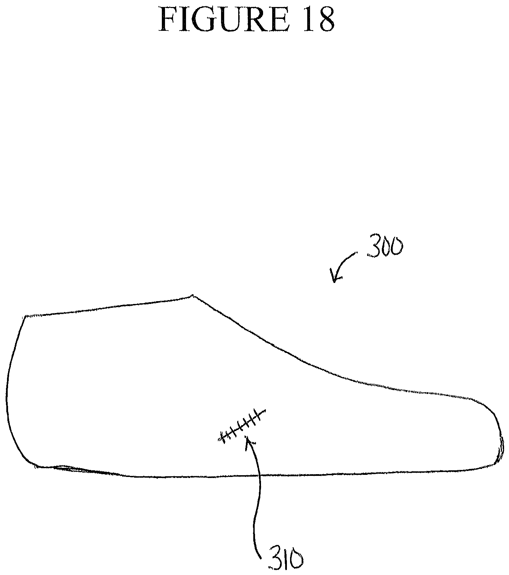

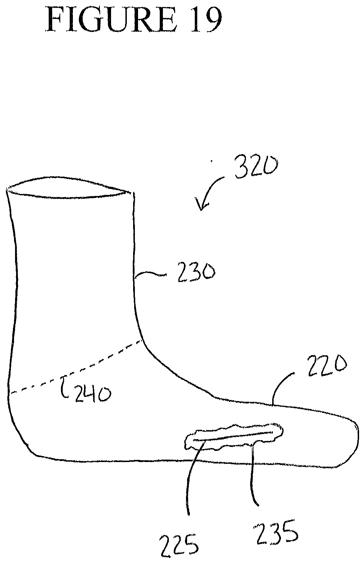

In some instances, the conformed or shaped ePTFE membrane may be cut, slit, torn, punctured, or otherwise damaged, either during the manufacturing of the bootie, shoe insert, or waterproof, breathable sock or after the bootie, shoe insert, or sock has been made. In a situation where the conformed or shaped ePTFE becomes discontinuous (such as where the conformed or shaped ePTFE membrane is damaged or torn), the conformed or shaped ePTFE membrane may be joined (*e.g.,* repaired) by attaching the conformed or shaped ePTFE membrane to itself at an integrally joined interface. In one exemplary embodiment shown in FIG. 18, a shoe insert 300 containing a shaped ePTFE membrane having a cut or tear therein may be joined (*e.g.,* stitched) together at an integrally joined interface 310. In another exemplary embodiment depicted in FIG. 19, a tear may be present in the shaped ePTFE membrane in a hybrid shoe insert 320 containing a shoe insert portion 220 and a second component 230 joined at seam 240. The shaped ePTFE may be joined to itself at an integrally joined interface 225 by an adhesive 235. In a further embodiment, the ePTFE may be folded at an integrally formed interface for aesthetic reasons, such as to form a pleat or tuck.

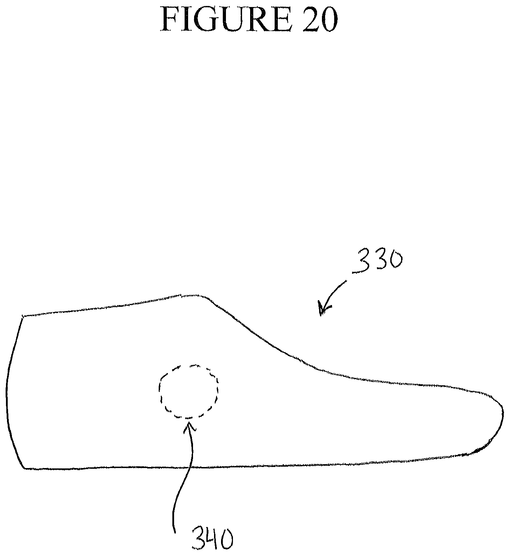

In a further embodiment, a tear or other damage in a conformed or shaped ePTFE membrane may be repaired by utilizing a patch, such as is shown in FIG. 20. In FIG. 20, damage to the shaped ePTFE membrane in the shoe insert 330 has been repaired by positioning a patch 340 over the damaged area. The patch may be adhered, stitched, or otherwise affixed to the shoe insert 330. It is to be appreciated that a shoe inserts containing a damaged shaped ePTFE membrane are merely illustrative, and one or more integrally joined interface may be utilized in the booties and socks described herein in a similar manner.

In yet another embodiment, an elastic or at least partially elastic tubular textile may be utilized to form a sock by applying an adhesive to the tubular textile and positioning the tubular textile/adhesive composite on a symmetrical last with the adhesive positioned outwardly, away from the symmetrical last. The symmetrical last may then be pushed through the conformable ePTFE tape to position the conformable ePTFE membrane on the tubular textile. The tubular textile with the ePTFE membrane thereon may be seamed at the toe portion to form a sock.

In a further embodiment, the ePTFE membrane may be densified by any conventional method such that the ePTFE membrane has a density of 2.0 g/cm³ or greater. Booties, shoe inserts, and socks may be formed with such densified ePTFE membranes; however, the booties, shoe inserts, and socks made from the densified ePTFE membranes would not be breathable. The densified ePTFE membrane provides protection against aggressive environments, such as, but not limited to, exposure to hazardous chemicals or biological threats.

## TEST METHODS

It should be understood that although certain methods and equipment are described below, any method or equipment determined suitable by one of ordinary skill in the art may be alternatively utilized.

### Conformability Assessments

To assess the conformability of the shoe insert in the formed shoe, the surface of the inner shoe can be felt by hand to determine any folds, wrinkles or seams that would ultimately compromise comfort fit. In addition, the shoes can be scanned using a scanning device to visually determine the presence or absence of air gaps to indicate how closely the shoe insert fits to the upper shoe materials.

### Whole Boot Moisture Vapor Transmission Rate Test

The Whole Boot Moisture Vapor Transmission Rate for each sample was determined in accordance with the Department of Defense Army Combat Boot Temperate Weather Specifications. The specifications are as follows:

### Whole boot breathability

The boot breathability test shall be designed to indicate the Moisture Vapor Transmission Rate (MVTR) through the test sample by means of a difference in concentration of moisture vapor between the interior and the exterior environment.

### Apparatus

a. The external test environment control system shall be capable of maintaining 23 ($\pm$ 1) °C and 50% $\pm$ 2% relative humidity throughout the test duration.

b. The weight scale shall be capable of determining the weight of test samples filled with water to an accuracy of ($\pm$ 0.01) gram.

c. The water holding bag shall be flexible so that it can be inserted into the test sample and conform to the interior contours; it must be thin enough so that folds do not create air gaps; it must have much higher MVTR than the footwear product to be tested; and it must be waterproof so that only moisture vapor contacts the interior of the footwear product rather than liquid water.

d. The internal heater for the test sample shall be capable of controlling the temperature of the liquid water uniformly in the test sample to 35 ($\pm$ 1) °C.

e. The sealing method around the collar of the test sample shall be impervious to both liquid water and water vapor.

### Procedure

a. Place sample in test environment and condition for at least 12 hours.

b. The heating device is inserted into the water holding bag and the complete assembly is then placed into the test sample opening and filled with water to a height of 5cm measured from inside sole.

c. Seal opening around the collar with plastic wrap around the top of the footwear and tape over using packaging tape.

d. Heat water in test sample to 35 °C.

e. Weigh test sample and record as Wi.

f. Hold temperature in test sample after weighing for a minimum of 4 hours.

g. After a minimum of 4 hours, reweigh test sample. Record weight as Wf and test duration as Td.

h. Calculate MVTR of the test sample in grams/hour from the equation below:

$$MVTR = (Wi - Wf)/Td$$

## Shoe and Shoe Insert Centrifuge Waterproofness Tests

(1) Waterproofness for each shoe sample was determined by use of the Centrifuge test described in U.S. Pat. No. 5,329,807 to Sugar, et al. assigned to W.L. Gore and Associates, Inc. and incorporated by reference herein in its entirety. The centrifuge tests were carried out for 30 minutes. The shoe sample was considered to be waterproof if no leakage was seen after 30 minutes

(2) Waterproofness for the 2-layer bootie samples and shoe insert samples (bootie after thermally conforming to a 265 sized running shoe last) was determined by a modified Centrifuge test described in U.S. Pat. No. 5,329,807 to Sugar, et al. assigned to W.L. Gore and Associates, Inc. To ensure accurate waterproof testing of socks, 800 mls of water was added to each sample which was then secured on a fixture using hose clamps around the rim of the upper heel area of the sock. The centrifuge tests were carried out for 60 minutes. The sample was considered to be waterproof if no leakage was seen after 60 minutes.

## Sock Moisture Vapor Transmission Rate Test

The Moisture Vapor Transmission Rate for each sock was determined in accordance with Department of Defense Army Combat Boot Temperate Weather Specification with the exception that a sock was used as the test sample. The specifications were as follows:

The sock breathability test shall be designed to indicate the Moisture Vapor Transmission Rate (MVTR) through the sock by means of a difference in concentration of moisture vapor between the interior of the sock and the exterior environment of the sock.

## Apparatus.

a. The external test environment control system shall be capable of maintaining 23 ($\pm$ 1) °C and 50% $\pm$ 2% relative humidity throughout the test duration.

b. The weight scale shall be capable of determining the weight of test samples filled with water to an accuracy of ($\pm$ 0.01) gram.

c. The water holding bag shall be flexible so that it can be inserted into the test sample and conform to the interior contours; it must be thin enough so that folds do not create air gaps; it must have much higher MVTR than the footwear product to be tested; and it must be waterproof so that only moisture vapor contacts the interior of the footwear product rather than liquid water.

d. The internal heater for the test sample shall be capable of controlling the temperature of the liquid water uniformly in the test sample to 35 ($\pm$ 1) °C.

e. The sealing method around the collar of the test sample shall be impervious to both liquid water and water vapor.

## Procedure.

a. Place sample in test environment and condition for at least 12 hours.

b. The heating device is inserted into the water holding bag and the complete assembly is then placed into the test sample opening and filled with water to a height of 5cm measured from inside sole.

c. Seal opening around the collar with plastic wrap around the top of the footwear and tape over using packaging tape.

d. Heat water in test sample to 35 °C.

e. Weigh test sample and record as Wi.

f. Hold temperature in test sample after weighing for a minimum of 4 hours.

g. After a minimum of 4 hours, reweigh test sample. Record weight as Wf and test duration as Td.

h. Calculate MVTR of the test sample in grams/hour from the equation below:

$$MVTR = (Wi - Wf)/Td$$

As a further modification and to represent the sock moisture vapor transmission rate when the sock is worn in a shoe, the moisture vapor transmission rate tests were repeated with the socks placed in a large size running shoe taking care to minimize air gaps. The same running shoe was used in each test and was dried using a hot air drier between tests. Throughout the tests, the total weight of the sock and shoe was measured to determine water vapor transmission rates.

A running shoe was made with synthetic upper materials (part number DMT20130502, commercially available from Dong Min Textile, 3173-24, Mungji-Dong, Gangseo-Ku, Busan, Korea). The synthetic upper materials of the shoe were stitched together to form the upper of the shoe. Toe and heel protectors were then attached to the upper of the shoe. A 6 oz canvas toe puff (commercially available from Dae Kyung Tex Co. #C-135 Gamjeon-dong Sasang-Gu, Busan, Korea) and a Rhenoflex 3105 heel counter having a thickness of 1.6 mm (commercially available from Rhenoflex, Giulinistrasse 2 67065 Ludwigshafen, Germany) were obtained and attached to the upper of the shoe. No liner materials were added.

The upper materials were then repositioned onto a large sized running shoe last and a solvent based chloroprene rubber adhesive was placed on the heel and toe areas (8250 supplied by Henkel Technologies Korea, 604-030, 472 Shinpyung-Dong, Saha-Ku, Busan, Korea) and sole (8700H supplied by Henkel Technologies Korea, 604-030, 472 Shinpyung-Dong, Saha-Ku, Busan, Korea) area. A protective EVA layer (2.0mm, hardness 55 supplied by Dong Bo S.M. Co., Ltd #520-36 Gouebob-dong Sang-Gu, Busan, Korea) was adhered to a non woven insole board (1.4 mm supplied by Han Young Industry Co., Ltd, #394-5 Samrak-dong Sang-Gu, Busan, Korea) using a solvent based chloroprene rubber adhesive (8700H supplied by Henkel Technologies Korea, 604-030, 472 Shinpyung-Dong, Saha-Ku, Busan, Korea). The upper materials were then lasted around the attached insole board, as known in the art to form a close fitting liner with the upper materials. Finally, a rubber sole was attached to the insole board using a solvent based polyurethane adhesive (6190S, part number ZY30204093) available from Henkel Technologies Korea, 604-030, 472 Shinpyung-Dong, Saha-Ku, Busan, Korea to complete the shoe construction.

### Sock Centrifuge Waterproofness Test

Waterproofness for each sock test sample was determined by use of the Centrifuge test described in U.S. Pat. No. 5,329,807 to Sugar, et al. assigned to W.L. Gore and Associates, Inc. To ensure accurate waterproof testing of socks, 700 mls of water was added to each sock test sample which was then secured on a fixture using hose clamps around the rim of the upper heel area of the sock. The centrifuge tests were carried out for 60 minutes. The sock test sample was considered to be waterproof if no leakage was seen after 60 minutes.

### Expanded PTFE Tape Characterization

The expanded PTFE tape utilized in the Examples set forth herein was tested according to the ASTM 638 Plastic Tensile Strength Test. Three (3) samples were taken from the PTFE tape in both longitudinal (machine) and transverse directions. Average values for the three samples were calculated.

The longitudinal samples had a thickness of 0.28 mm, a mass per area of 226 g/m$^2$, a bulk density of 0.80 g/cc, a maximum load of 8.68 kgf and an extensibility (strain at max load) of a strain at max load of 34%. The transverse samples had a thickness of 0.28 mm, a mass per area of 220 g/m$^2$, a bulk density of 0.77g/cc, a maximum load of 0.11 kgf and an extensibility (strain at max load) of 8422%.

### EXAMPLES

### Example 1

A symmetrical cast aluminum foot last having a shape as depicted generally in FIG. 3 was fixed onto a clamp which can rotated through an angle of approximately 140° using a pneumatic cylinder. A polyurethane adhesive web (UT8, 20 g/m$^2$ polyurethane non-woven hot melt adhesive commercially available from Protechnic, 41 Avenue Montaigne, F-68700, Cernay, France) was applied to one side of a commercially available 30 denier (33 dtex) 100% Polyamid black sock (Knie 30 Leicht deckend obtained from the Nur Die GmbH, Rheine, Germany) using a heat press set at 130° C and effective pressure of 5 psi. The sock with the polyurethane adhesive web thereon was positioned tightly over the last. The sock was applied to the last with the adhesive web exposed on the outer surface of the last. Care was taken when applying the sock to the last to avoid wrinkles.

A fine powder of PTFE polymer (Daiken Industries, Ltd., Orangeburg, N.Y.) was blended with Isopar® K (Exxon Mobil Corp., Fairfax, VA) in the proportion of 0.196 g/g of fine powder. The lubricated powder was compressed in a cylinder to form a pellet and placed into an oven set at 70° C for approximately 12 hours. Compressed and heated pellets were ram extruded to produce tapes approximately 15.2 cm wide by 0.73 mm thick. Three separate rolls of tape were produced and layered together between compression rolls to a thickness of 0.76 cm. The tape was then transversely stretched to 56 cm (*i.e.,* at a ratio of 3.7:1), restrained, and then dried in an oven set at 270° C. The dry tape was longitudinally expanded between banks of rolls over a heated plate set to a temperature of 340° C. The speed ratio between the second bank of rolls and the first bank of rolls, and hence the expansion ratio, was 8:1.

A portion of the expanded PTFE tape having a length of approximately 1 meter and a width of approximately 12.5 cm was fixed in a frame by placing the edges of the PTFE tape between two securing metal plates. The tape was further secured by compressing the PTFE tape between the plates using 5 screw bolts positioned along the tape length. To ensure that the width of the PTFE tape remained fixed, each tape edge and plate assembly was secured to the frame using locking nuts. The secured PTFE tape in the frame had a width of 9 cm.

The complete frame containing the PTFE tape and securing plates were then placed under an IR heater set at 100% (full power) for 10 seconds during which the tape reached a temperature of 40-50° C. The locking nuts were then released and the edges of the tape were slowly, manually moved apart until the tape was expanded in the width direction to a width of 27 cm. To prevent shrink back of the PTFE tape and to maintain the 27 cm tape width, the frame edges were again secured using the locking nuts. After the PTFE tape was expanded in the width direction and secured using the locking nuts, the tape was heated under the IR heater, which was set at 100% (full power) for 30 seconds, during which the tape reached a temperature of 70-80 °C.

The frame containing the expanded PTFE tape was then quickly removed from under the heater and positioned above the symmetrical last. The pneumatic cylinder was then activated to allow the symmetrical last having thereon the sock and adhesive to rotate upwardly at an angle of 90° to penetrate and deform the preheated PTFE tape around the last. The final deformation of the tape to conform the tape to the general shape of the last was completed by hand to ensure that the tape was deformed closely to the shape of the last and to minimize wrinkles.

A second commercially available 30 denier (33 dtex) 100% Polyamid black sock (Knie 30 Leicht deckend commercially available from Nur Die GmbH, Rheine, Germany) having thereon a polyurethane adhesive web (UT8, 20 g/m$^2$ polyurethane non-woven hot melt adhesive commercially available from Protechnic, 41 Avenue Montaigne, F-68700, Cernay, France) was then placed over the deformed PTFE tape with the polyurethane adhesive positioned in direct contact with the surface of the deformed expanded PTFE tape. Care was taken to minimize wrinkling of the PTFE tape and the sock.

The resulting 3-layer article (*i.e.,* sock/deformed, expanded PTFE tape/sock) was then secured at the collar of the last using an elastomeric retaining band to prevent further movement. The complete assembly containing the 3-layer article and the symmetrical aluminum last was then placed in an oven set at 160° C for a time of 45 min. During this thermal dwell time, the assembly reached an approximate temperature of 130° C. The assembly was then removed and a silicon vacuum bag was quickly applied over the assembly. A vacuum was applied at 20-25 inches Hg for 10 min to ensure good contact between the three separate layers and to allow for subsequent adhesive bonding between the socks and the expanded PTFE tape. Cool, compressed air was then passed through the assembly for an additional 10-20 min while under vacuum to cool the assembly to approximately 50° C. The vacuum and compressed air were removed from the assembly. Next, the silicon bag was removed. The elastomeric retaining band was removed from the last. Finally, the completed 3-layer bootie was slowly and carefully removed from the last.

## Example 2

A symmetrical nylon foot last having a shape as depicted generally in FIG. 3 was fixed onto a clamp which can be rotated through an angle of approximately 140° using a pneumatic cylinder. A polyurethane adhesive web (UT8, 20 g/m$^2$ polyurethane non-woven hot melt adhesive obtained from Protechnic, 41 Avenue Montaigne, F-68700, Cernay, France) was applied to one side of a commercially available 60 den (66 dtex) 61% polyamide, 37% cotton, and 2% elastane black sock (Sockchen Naturelle 60 obtained from the Nur Die GmbH, Rheine, Germany) using a heat press set at 130° C and an effective pressure of 5 psi. The sock with the polyurethane adhesive web thereon was positioned tightly over the last. The sock was applied to the last with the adhesive web exposed on the outer surface of the last. Care was taken when applying the sock to the last to avoid wrinkles.

A portion of the expanded PTFE tape produced in Example 1 having a length of approximately 1 meter and a width of approximately 7.4 cm was obtained and fixed in a frame by placing the edges of the PTFE tape between six toggle clamps positioned along the tape edges and compressing between two rubber seals. To ensure that the width remained fixed, each tape edge and clamp assembly was fixed to the frame using locking nuts. The secured tape in the frame had a width of 6.9 cm.

The tape fixed in the frame was then heated using an industrial air heater for approximately 20 seconds, during which the PTFE tape reached a temperature of 40-50° C. The locking nuts were then released and the edges of the tape were slowly, manually moved apart until the tape was expanded in the width direction to a width of 37.1 cm. To prevent shrink back of the PTFE tape and to maintain the tape width, the frame edges were again secured using the locking nuts. After the PTFE tape was expanded in the width direction and secured using the locking nuts, the tape was then heated using the industrial air heater, during which the tape reached a temperature of approximately 70° C.

The frame containing the expanded PTFE tape was removed from the heat and positioned above the symmetrical last. The pneumatic cylinder was then activated to allow the symmetrical last having thereon the sock and adhesive to rotate in an upward direction at an angle of 90° to penetrate and deform the preheated PTFE tape around the last. The final deformation of the tape to conform the tape to the general shape of the last was completed by hand to ensure that the tape deformed closely to the shape of the last and to minimize wrinkles.

The 2-layer article (*i.e.,* sock/deformed expanded PTFE tape) was then secured at the collar of the last using an elastomeric retaining band to prevent further movement. The complete assembly containing the 2-layer article and nylon last was then placed in an oven set at 140° C for a time of 30 min. During this dwell time, the assembly reached an approximate temperature of 120° C. The assembly was then removed and a vacuum bag was quickly applied over the assembly. A vacuum was applied at 27 inches Hg until the assembly had cooled to approximately 50° C to ensure good contact between the two layers (*i.e.,* sock and polyurethane adhesive) and to allow for subsequent adhesive bonding between the sock and the expanded PTFE tape layer. The vacuum was then removed from the assembly. Next, the vacuum bag and the elastomeric retaining band were removed from the last. The completed 2-layer bootie was slowly and carefully removed from the last.

The 2-layer bootie was then tested for water vapor permeability (breathability) using the Whole Boot Moisture Vapor Transmission Rate test method outlined above with the expanded PTFE membrane layer positioned on the exterior part of the test sample. The average water vapor permeability was determined to be 27.3 g/hr.

In addition, the 2-layer bootie was tested for waterproofness according to the Modified Centrifuge Test for waterproofness described above. The shoe insert met the waterproofness standard, showing no water leaks after 60 min.

## Example 3

A 2-layer bootie was produced in the same manner as Example 2. A 2-layer shoe insert was then thermally shaped by loosely placing the bootie onto a conventional men's 265 running shoe last with the expanded PTFE membrane layer exposed on the upper surface and heating the precursor in an air circulating oven at 140° C for 30 min. During this thermal dwell, the shoe insert closely formed to the shape and size of the conventional, asymmetrical last, thereby forming a smooth and close fitting shoe insert to the last. The last was removed from the oven and allowed to cool to less than 50° C, after which the two-layer shoe insert was removed from the conventional, asymmetric last.

The three-dimensional shoe insert was then tested for water vapor permeability (breathability) using the Whole Boot Moisture Vapor Transmission Rate test method outlined above with the expanded PTFE membrane layer exposed on the upper surface. The average water vapor permeability was determined at 31.8 g/hr.

The three-dimensional shoe insert was also tested for waterproofness according to the Modified Centrifuge Test for Waterproofness described above. The 2-layer bootie met the waterproofness standard, showing no water leaks after 60 min.

## Example 4

A waterproof running shoe was made with synthetic upper materials suitable for a running shoe (part number DMT20130502 commercially available from Dong Min Textile, 3173-24, Mungji-Dong, Gangseo-Ku, Busan, Korea,). The synthetic upper materials of the shoe were stitched together to form the upper of the shoe. Toe and heel protectors were then attached to the upper of the shoe. A 6 oz canvas toe puff (commercially available from Dae Kyung Tex Co. #C-135 Gamjeon-dong Sasang-Gu, Busan, Korea) and a Rhenoflex 3105 heel counter having a thickness of 1.6 mm (commercially available from Rhenoflex, Giulinistrasse 2 67065 Ludwigshafen, Germany) were obtained and attached to the upper of the shoe.

A 3-layer bootie was produced in the same manner as Example 1. A 3-layer bootie was thermally shaped by loosely placing the bootie onto a conventional men's 280 size running shoe asymmetrical last and heating the bootie and last in an air circulating oven at 140° C for 30 min. During this thermal dwell, the bootie closely formed to the shape and size of the conventional, asymmetrical last, thereby forming a smooth and close fitting shoe insert to the last. The last was then removed from the oven and allowed to cool to less than 50° C, after which the shoe insert was removed from the conventional, asymmetric last.

During shoe production, the shaped shoe insert was again placed on the 280 size running shoe last to form a smooth and close fit around the last with no seams, noticeable wrinkles, or excess material. The shoe insert was then cut and trimmed around the heel collar area to ensure the shoe insert pattern was correctly sized.

The shoe insert was removed from the last and attached to the synthetic upper materials by stitching the shoe insert to the collar portion of the upper of the shoe. The synthetic upper materials and stitched shoe insert were then repositioned onto the 280 size running shoe last and a solvent based chloroprene rubber adhesive was placed on the heel and toe areas (part number 8250 commercially available from Henkel Technologies Korea, 604-030, 472 Shinpyung-Dong, Saha-Ku, Busan, Korea) and sole area (8700H supplied by Henkel Technologies Korea, 604-030, 472 Shinpyung-Dong, Saha-Ku, Busan, Korea).

A protective ethylene vinyl acetate (EVA) layer (2.0 mm, hardness 55 commercially available from Dong Bo S.M. Co., Ltd #520-36 Gouebob-dong Sang-Gu, Busan, Korea) was adhered to a non-woven insole board (1.4 mm supplied by Han Young Industry Co., Ltd, #394-5 Samrak-dong Sang-Gu, Busan, Korea) using the solvent based chloroprene rubber adhesive (8700H commercially available from Henkel Technologies Korea, 604-030, 472 Shinpyung-Dong, Saha-Ku, Busan, Korea). The EVA protective layer was then attached to the sole of the shoe insert. The synthetic upper materials were then lasted around the shoe insert and attached insole board to form a close fitting shoe insert with the synthetic upper materials. Finally, a rubber sole was attached to the insole of the shoe insert using a solvent based polyurethane adhesive (6190S, part number ZY30204093, commercially available from Henkel Technologies Korea, 604-030, 472 Shinpyung-Dong, Saha-Ku, Busan, Korea) to complete the shoe construction.

Selected shoes were then tested for water vapor permeability (breathability) using the Whole Boot Moisture Vapor Transmission Rate test method outlined above in the whole boot moisture vapor transmission rate test. The average water vapor permeability was determined at 11.9 g/hr.

The selected shoes were then tested for waterproofness according to the Centrifuge Test for Waterproofness described above. The selected shoes met the waterproofness standard, showing no water leaks after 30 min.

Basic hand assessment of the surface characteristics of the inner shoe to assess the degree of fit of the shoe insert shows that no folds, wrinkles, or seams were present to compromise the comfort fit characteristics of the shoes.

## Comparative Example 1

A waterproof shoe was made with synthetic upper materials suitable for a running shoe (commercially available from Dong Min Textile, 3173-24, Mungji-Dong, Gangseo-Ku, Busan, Korea, part number DMT20130502). The synthetic upper materials were stitched together to form the upper of the waterproof shoe. A toe protector and heel protector were then attached to the upper. A 6oz canvas toe puff (supplied by Dae Kyung Tex Co. #C-135 Gamjeon-dong Sasang-Gu, Busan, Korea) and a Rhenoflex 3105 heel counter having a thickness of 1.6 mm (commercially available from Rhenoflex, Giulinistrasse 2 67065 Ludwigshafen, Germany) were obtained and attached to the upper of the shoe.

A shoe insert made of a laminate of expanded polytetrafluoroethylene and a textile (part number VISI001001B, commercially available from W.L. Gore and Associates Inc., Elkton, MD) was formed. The laminate was cut and stitched together to form a shoe insert of the correct size and shape of a 280 size running shoe last. GORE-SEAM® tape (commercially available from W.L. Gore and Associates Inc., Elkton, MD) was then applied to the stitched seams of the shoe insert to form a waterproof seam. The shoe insert was then positioned on the 280 size running shoe last which formed a reasonable fit around the last, although wrinkles and excess material were noted.

The shoe insert was then removed from the last and attached to the synthetic upper materials of the running shoe by stitching the shoe insert to the collar portion of the upper. The synthetic upper materials and stitched shoe insert were then repositioned onto the 280 size running shoe last and a solvent based chloroprene rubber adhesive was placed on the heel and toe areas (8250 supplied by Henkel Technologies Korea, 604-030, 472 Shinpyung-Dong, Saha-Ku, Busan, Korea) and sole area (8700H supplied by Henkel Technologies Korea, 604-030, 472 Shinpyung-Dong, Saha-Ku, Busan, Korea). A protective EVA layer (2.0 mm, hardness 55 supplied by Dong Bo S.M. Co., Ltd #520-36 Gouebob-dong Sang-Gu, Busan, Korea) was adhered to the non woven insole board (1.4 mm supplied by Han Young Industry Co., Ltd, #394-5 Samrak-dong Sang-Gu, Busan, Korea) using a solvent based chloroprene rubber adhesive (8700H supplied by Henkel Technologies Korea, 604-030, 472 Shinpyung-Dong, Saha-Ku, Busan, Korea) and the EVA protective layer was then attached to the sole of the shoe insert. The upper materials were then lasted around the shoe insert and attached insole board to form a close fitting shoe insert with the upper materials. Finally, a rubber sole was attached to the insole of the liner using a solvent based polyurethane adhesive (6190S, part number ZY30204093, commercially available from Henkel Technologies Korea, 604-030, 472 Shinpyung-Dong, Saha-Ku, Busan, Korea) to complete the shoe construction.

Selected shoes were then tested for water vapor permeability (breathability) using the Whole Boot Water Vapor Permeability test method outlined above in the whole boot moisture vapor transmission rate test. The average water vapor permeability was determined at 8.8 g/hr.

The selected shoes were then tested for waterproofness utilizing the Centrifuge Test for Waterproofness described above showing no water leaks after 30 min. The selected footwear met the waterproofness standard.

Basic hand assessment of the surface characteristics of the inner shoe to assess the degree of the fit of the shoe insert showed that significant folds, wrinkles, and seams were present, especially in the toe areas which would be expected to compromise comfort fit characteristics of the shoes.

## Example 5

A waterproof running shoe was made with synthetic upper materials suitable for a running shoe (part number DMT20130502, commercially available from Dong Min Textile, 3173-24, Mungji-Dong, Gangseo-Ku, Busan, Korea). The upper materials were stitched together to form the upper of the waterproof footwear. A 6 oz canvas toe puff (supplied by Dae Kyung Tex Co. #C-135 Gamjeon-dong Sasang-Gu, Busan, Korea) and a Rhenoflex 3105 heel counter having a 1.6 mm thickness (commercially available from Rhenoflex, Giulinistrasse 2 67065 Ludwigshafen, Germany) were attached to the upper of the shoe.

A 3-layer bootie was produced in the same manner as Example 1. The 3-layer bootie was then thermally formed by loosely placing the bootie onto a conventional ladies 230 size running shoe asymmetrical last and heating the bootie and last in an air circulating oven at 140° C for 30 min. During this thermal dwell, the bootie closely formed to the shape and size of the conventional, asymmetrical last, thereby forming a smooth and close fitting shoe insert to the last. The last was removed from the oven and allowed to cool to less than 50° C, after which the shoe insert was removed from the conventional, asymmetric last.

During shoe production, the shaped shoe insert was again placed on the 230 size running shoe last to form a smooth and close fit around the last with no seams, noticeable wrinkles, or excess material. The shoe insert was then cut and trimmed around the heel collar area to ensure the shoe insert pattern was correctly sized. The shoe insert was removed from the last and attached to the synthetic upper materials by stitching the shoe insert to the collar portion of the upper materials.

The upper materials and stitched shoe insert were then repositioned onto the 230 size shoe last and a solvent based chloroprene rubber adhesive was placed on the heel and toe areas (8250 supplied by Henkel Technologies Korea, 604-030, 472 Shinpyung-Dong, Saha-Ku, Busan, Korea) and sole area (8700H supplied by Henkel Technologies Korea, 604-030, 472 Shinpyung-Dong, Saha-Ku, Busan, Korea). A protective EVA layer (2.0 mm, hardness 55 supplied by Dong Bo S.M. Co., Ltd #520-36 Gouebob-dong Sang-Gu, Busan, Korea) was adhered to the non woven insole board (1.4 mm, supplied by Han Young Industry Co., Ltd, #394-5 Samrak-dong Sang-Gu, Busan, Korea) using a solvent based chloroprene rubber adhesive (8700H supplied by Henkel Technologies Korea, 604-030, 472 Shinpyung-Dong, Saha-Ku, Busan, Korea). The EVA protective layer was then attached to the sole of the shoe insert. The upper materials were then lasted around the shoe insert and attached insole board to form a close fitting shoe insert with the upper materials. Finally, a rubber sole was attached to the insole of the shoe insert using a solvent based polyurethane adhesive (6190S, part number ZY30204093, commercially available from Henkel Technologies Korea, 604-030, 472 Shinpyung-Dong, Saha-Ku, Busan, Korea to complete the shoe construction.

Selected shoes were then tested for water vapor permeability (breathability) using the Whole Boot Water Vapor Permeability test method outlined above in the whole boot moisture vapor transmission rate test. The average water vapor permeability was determined to be 11.0 g/hr.

The selected shoes were then tested for waterproofness according to the Centrifuge Test for Waterproofness described above. The selected footwear met the waterproofness standard, showing no water leaks after 30 min.

Basic hand assessment of the surface characteristics of the inner shoe to assess the degree of the fit of the shoe insert shows that no folds, wrinkles, or seams were present to compromise comfort fit characteristics of the shoes.

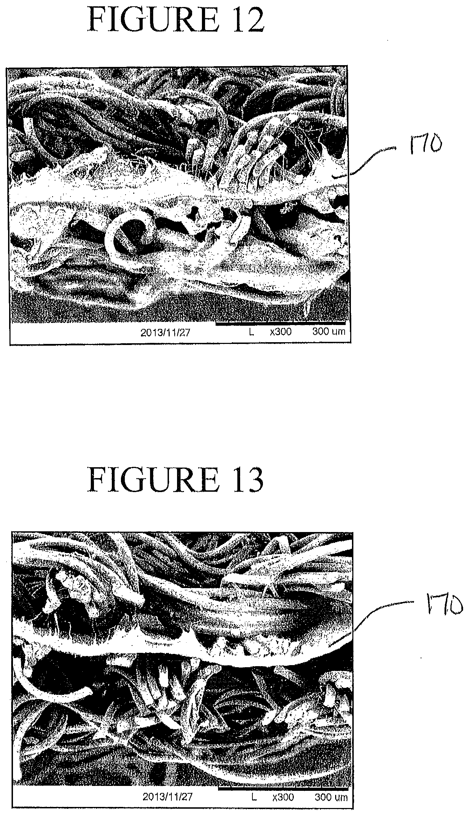

Three thickness measurements of the ePTFE membrane from the right side upper portion of the shoe and of the ePTFE membrane from the toe portion were measured and recorded. Average measurements were as follows: right side upper portion = 44.87 microns and toe portion=23.27 microns. The thickness ratio was determined to be approximately 2:1. SEMs taken at 300X magnification of the right side upper portion and toe portion are shown in FIGS. 12 and 13, respectively. The ePTFE membrane is identified as reference numeral 170.

**Comparative Example 2**

A waterproof running shoe was made with synthetic upper materials suitable for a running shoe (part number DMT20130502, commercially available from Dong Min Textile, 3173-24, Mungji-Dong, Gangseo-Ku, Busan, Korea). The synthetic upper materials were stitched together to form the upper of the waterproof shoe. A 6oz canvas toe puff (supplied by Dae Kyung Tex Co. #C-135 Gamjeon-dong Sasang-Gu, Busan, Korea) and a Rhenoflex 3105 heel counter having a thickness of 1.6 mm (supplied by Rhenoflex, Giulinistrasse 2 67065 Ludwigshafen, Germany) were attached to the upper of the shoe.

A shoe insert made of a laminate of expanded polytetrafluoroethylene and a textile (part number VISI001001B, commercially available from W.L. Gore and Associates, Inc., Elkton, MD) was formed. The laminate was cut and stitched together to form a shoe insert having the size and shape of the 230 running shoe last. GORE-SEAM® tape (available from W.L. Gore and Associates Inc., Elkton, MD) was then applied to the stitched seams to form a waterproof seam over the stitched seams of the shoe insert. The shoe insert was then placed on the 230 size shoe last which formed a reasonable fit around the last, although wrinkles and excess material were noted.

The shoe insert was then removed from the last and attached to the synthetic upper materials of the running shoe by stitching the liner to the collar portion of the upper. The synthetic upper materials and stitched liner were then repositioned onto the 230 size shoe last and a solvent based chloroprene rubber adhesive was placed on the heel and toe areas (8250 supplied by Henkel Technologies Korea, 604-030, 472 Shinpyung-Dong, Saha-Ku, Busan, Korea) and sole area (8700H supplied by Henkel Technologies Korea, 604-030, 472 Shinpyung-Dong, Saha-Ku, Busan, Korea).

A protective EVA layer (2.0 mm, hardness 55 supplied by Dong Bo S.M. Co., Ltd #520-36 Gouebob-dong Sang-Gu, Busan, Korea) was adhered to the non woven insole board (1.4mm supplied by Han Young Industry Co., Ltd, #394-5 Samrak-dong Sang-Gu, Busan, Korea) using the solvent based chloroprene rubber adhesive (8700H supplied by Henkel Technologies Korea, 604-030, 472 Shinpyung-Dong, Saha-Ku, Busan, Korea). The EVA protective layer was then attached to the sole of the shoe insert. The upper materials were then lasted around the liner and attached insole board to form a close fitting shoe insert with the upper materials. Finally, a rubber sole was attached to the insole of the shoe insert using a solvent based polyurethane adhesive (6190S, part number ZY30204093, commercially available from Henkel Technologies Korea, 604-030, 472 Shinpyung-Dong, Saha-Ku, Busan, Korea) to complete the shoe construction.

Selected shoes were then tested for water vapor permeability (breathability) using the Whole Boot Water Vapor Permeability test method outlined above in the whole boot moisture vapor transmission rate test. The average water vapor permeability was determined to be 6.4 g/hr.

The selected shoes were then tested for waterproofness according to the Centrifuge Test for Waterproofness described above. The selected footwear met the waterproofness standard, showing no water leaks after 30 min.

Basic hand assessment of the surface characteristics of the inner shoe to assess the degree of shoe insert fit shows that significant folds, wrinkles, and seams were present, especially in the toe areas that would be expected to compromise comfort fit characteristics of the shoes.

### Example 6

A waterproof casual shoe was made with natural split suede leather upper materials suitable for a casual shoe (part number JS120130501, commercially available from J. S. IND Co., Ltd. #1086-9, Janglim-Dong, Saha-Ku, Busan, Korea). The suede leather upper materials were stitched together to form the upper of the waterproof shoe. A 0.6 mm toe puff (part number TFL060, commercially available from Han Young Industry Co., Ltd, #394-5 Samrak-dong Sasang-Gu, Busan, Korea) and a 1.7 mm heel counter leather board (supplied by Young Poly Chemical Co. Ltd. #907-7 Manduck 3-dong Buk-Gu, Busan, Korea) were attached to the upper of the shoe.

A 3-layer bootie was produced in the same manner as Example 1. The 3-layer bootie was then thermally formed by loosely placing the bootie onto a conventional men's 280 size casual shoe asymmetrical last and heating the bootie and last in an air circulating oven at 140° C for 30 min. During this thermal dwell, the bootie closely formed to the shape and size of the conventional, asymmetrical last, thereby forming a smooth and close fitting shoe insert to the last. The last was removed from the oven and allowed to cool to less than 50° C, after which the shoe insert was removed from the conventional, asymmetric last.

During shoe production, the shaped shoe insert was again placed on the men's 280 size casual shoe last to form a smooth and close fit around the last with no seams, noticeable wrinkles, or excess material. The shoe insert was then cut and trimmed around the heel collar area to ensure the shoe insert pattern was correctly sized. The shoe insert was then removed from the last and attached to the leather upper materials of the casual shoe by stitching the shoe insert to the collar portion of the upper.

The suede leather upper materials and stitched liner were then repositioned onto the 280 size casual shoe last and a solvent based chloroprene rubber adhesive was placed on the heel and toe areas (8250 supplied by Henkel Technologies Korea, 604-030, 472 Shinpyung-Dong, Saha-Ku, Busan, Korea) and sole areas (8700H supplied by Henkel Technologies Korea, 604-030, 472 Shinpyung-Dong, Saha-Ku, Busan, Korea). A protective EVA layer (2.0 mm, hardness 55, supplied by Dong Bo S.M. Co., Ltd #520-36 Gouebob-dong Sang-Gu, Busan, Korea) was adhered to the insole board (A TEX 6331 + Blue Tex commercially available from Dong Bo S.M. Co., Ltd #520-36 Gouebob-dong Sang-Gu, Busan, Korea) using a solvent based chloroprene rubber adhesive (8700H supplied by Henkel Technologies Korea, 604-030, 472 Shinpyung-Dong, Saha-Ku, Busan, Korea). The EVA protective layer was then attached to the sole of the shoe insert. The upper materials were then lasted around the liner and attached insole board. Finally, a rubber sole was attached to the insole of the shoe insert using a solvent based polyurethane adhesive (6190S, part number ZY30204093, commercially available from Henkel Technologies Korea, 604-030, 472 Shinpyung-Dong, Saha-Ku, Busan, Korea) to complete the shoe construction.

Selected shoes were then tested for water vapor permeability (breathability) using the Whole Boot Water Vapor Permeability test method outlined above in the whole boot moisture vapor transmission rate test. The average water vapor permeability was determined to be 6.8 g/hr.

The selected shoes were then tested for waterproofness according to the Centrifuge Test for Waterproofness described above. The selected footwear met the waterproofness standard, showing no water leaks after 30 min.

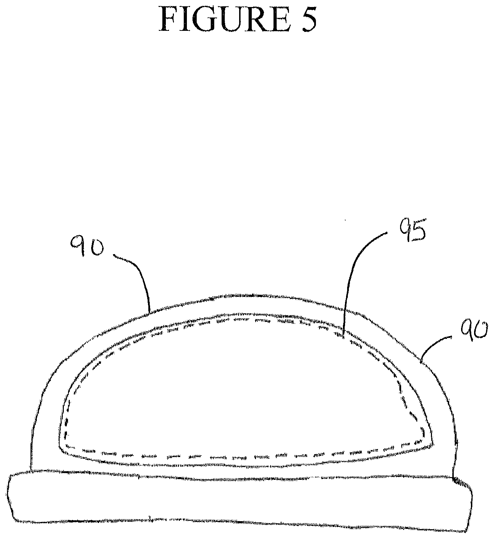

Basic hand assessment of the surface characteristics of the inner shoe to assess the degree of fit of the shoe insert revealed that no folds, wrinkles or seams were present to compromise comfort fit characteristics of the shoes. Utilizing 3D scanning equipment, images of the shoe cross section at various positions along the shoe length were captured. FIG. 5 represents a typical cross-sectional image at a position 3 cm from the end of the shoe toe area. The 3-layer shoe insert 95 showed a very close fit to the upper leather materials 90 with no evidence of folds, seams, and minimal air spaces.

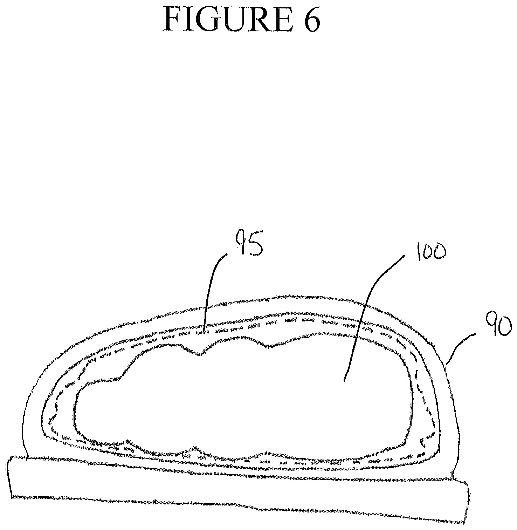

In order to better illustrate the fit of the shoe insert in the shoe during use, additional 3D scans were taken with an artificial foot insert of the appropriate size. A schematic illustration of such a scan of a cross-section of a shoe with an artificial foot positioned therein is depicted in FIG. 6. As shown in FIG. 6, there is minimal contact between the shoe insert 95 and the foot insert 100. Such minimal contact indicated excellent comfort and excellent fit for the wearer of the shoe.

### Comparative Example 3

A waterproof casual shoe was made with natural split suede leather upper materials suitable for a casual shoe (part number JS120130501 commercially available from J. S. IND Co., Ltd. #1086-9, Janglim-Dong, Saha-Ku, Busan, Korea). The upper materials were stitched together to form the upper of the waterproof casual shoe. A 0.6 mm toe puff (part number TFL060, commercially available from Han Young Industry Co., Ltd, #394-5 Samrak-dong Sasang-Gu, Busan, Korea) and a 1.7 mm leather board heel counter (supplied by Young Poly Chemical Co. Ltd. #907-7 Manduck 3-dong Buk-Gu, Busan, Korea) were attached to the upper of the shoe. A shoe insert were made of a laminate of expanded polytetrafluoroethylene and a textile (part number VISI001001B, commercially available from W.L. Gore and Associates Inc., Elkton, MD). The laminate was cut and stitched together to form a shoe insert having the size and shape of a 280 size casual shoe last. GORE-SEAM® tape (commercially available from W.L. Gore and Associates Inc., Elkton, MD) was then applied to the stitched seams to form a waterproof seam over the stitched seams of the shoe insert. The shoe insert was then placed on the 280 size shoe last which formed a reasonable fit around the last, although wrinkles and excess material were observed.

The shoe insert was then removed from the last and attached to the leather upper materials of the casual shoe by stitching the shoe insert to the collar portion of the upper. The upper materials and stitched liner were then repositioned onto the 280 size casual shoe last and a solvent based chloroprene rubber adhesive was placed on the heel and toe areas (8250 supplied by Henkel Technologies Korea, 604-030, 472 Shinpyung-Dong, Saha-Ku, Busan, Korea) and sole area (8700H supplied by Henkel Technologies Korea, 604-030, 472 Shinpyung-Dong, Saha-Ku, Busan, Korea).

A protective EVA layer (2.0 mm, hardness 55 supplied by Dong Bo S.M. Co., Ltd #520-36 Gouebob-dong Sang-Gu, Busan, Korea) was adhered to the insole board (A TEX 6331 + Blue Tex supplied by Dong Bo S.M. Co., Ltd #520-36 Gouebob-dong Sang-Gu, Busan, Korea) using a solvent based chloroprene rubber adhesive (8700H supplied by Henkel Technologies Korea, 604-030, 472 Shinpyung-Dong, Saha-Ku, Korea). The EVA protective layer was then attached to the sole of the shoe insert. The upper materials were then lasted around the shoe insert and attached insole board. Finally, a rubber sole was attached to the insole of the liner using a solvent based polyurethane adhesive (6190S, part number ZY30204093, commercially available from Henkel Technologies Korea, 604-030, 472 Shinpyung-Dong, Saha-Ku, Busan, Korea) to complete the shoe construction.

Selected shoes were then tested for water vapor permeability (breathability) using the Whole Boot Water Vapor Permeability test method outlined above in the whole boot moisture vapor transmission rate test. The average water vapor permeability was determined to be 6.5 g/hr.

The selected shoes were then tested for waterproofness according to the Centrifuge Test for Waterproofness described above. The selected footwear met the waterproofness standard, showing no water leaks after 30 min.

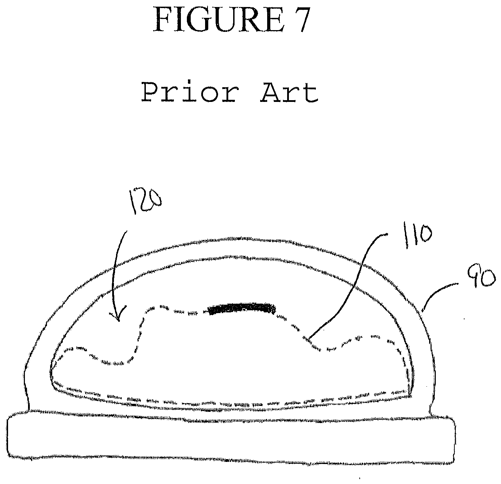

Basic hand assessment of the surface characteristics of the inner shoe to assess the degree of the fit of the shoe insert showed that significant folds, wrinkles, or seams were present, especially in the toe areas, which would be expected to compromise comfort fit characteristics of the shoes. Utilizing 3D scanning equipment, images of the shoe cross section at various positions along the shoe length were captured. FIG. 7 depicts a schematic illustration of a typical cross-sectional image at a position 3 cm from the end of the shoe toe area. As shown in FIG. 7, the polytetrafluoroethylene-based shoe insert 110 showed a relatively poor fit to the upper leather materials 90 with evidence of significant folds and large air spaces 120 between the shoe insert 110 and upper materials 90.

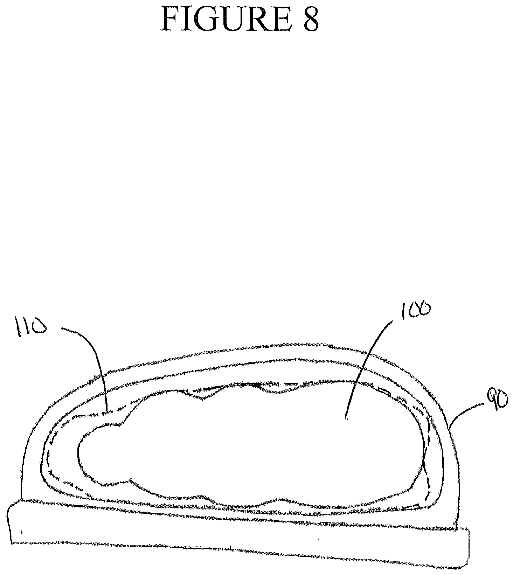

To better illustrate the fit during use, additional 3D scans were taken with an artificial foot insert 100 of the appropriate size. A schematic depiction of a typical scan of a cross-section of the shoe with the artificial shoe insert 100 is depicted in FIG. 8, clearly highlighting a significant number of contacts or interactions between the shoe insert 110 and foot insert 100, which would be expected to compromise comfort fit.

**Example 7**

A waterproof woman's casual shoe was made with natural split suede leather upper materials suitable for a casual shoe (part number JS120130501, commercially available from J. S. IND Co., Ltd. #1086-9, Janglim-Dong, Saha-Ku, Busan, Korea). The upper materials were stitched together to form the upper of the waterproof casual shoe. A 0.6 mm toe puff (part number TFL060, commercially available from Han Young Industry Co., Ltd, #394-5 Samrak-dong Sasang-Gu, Busan, Korea) and a 1.7 mm leather board heel counter (supplied by Young Poly Chemical Co. Ltd. #907-7 Manduck 3-dong Buk-Gu, Busan, Korea. Liner materials) were attached to the upper of the shoe.

A 3-layer bootie was produced in the same manner as Example 1 The 3-layer bootie was then thermally formed by loosely placing the bootie onto a conventional ladies 230 size casual shoe asymmetrical last and heating the bootie and last in an air circulating oven at 140° C for 30 min. During this thermal dwell, the bootie closely formed to the shape and size of the conventional, asymmetrical last, thereby forming a smooth and close fitting shoe insert to the last. The last was removed from the oven and allowed to cool to less than 50° C, after which the shoe insert was removed from the conventional, asymmetric last.

During shoe production, the shaped shoe insert was placed on the 230 size casual shoe last to form a smooth and close fit around the last with no seams, noticeable wrinkles, or excess material. The shoe insert was then cut and trimmed around the heel collar area to ensure the shoe insert pattern was correctly sized.

The shoe insert was then removed from the last and attached to the leather upper materials of the casual shoe by stitching the shoe insert to the collar portion of the upper. The upper materials and stitched liner were then repositioned onto the 230 size casual shoe last and a solvent based chloroprene rubber adhesive was placed on the heel and toe areas (8250 supplied by Henkel Technologies Korea, 604-030, 472 Shinpyung-Dong, Saha-Ku, Busan, Korea) and sole (8700H supplied by Henkel Technologies Korea, 604-030, 472 Shinpyung-Dong, Saha-Ku, Busan, Korea). A protective EVA layer (2.0 mm, hardness 55 supplied by Dong Bo S.M. Co., Ltd #520-36 Gouebob-dong Sang-Gu, Busan, Korea) was adhered to the insole board (A TEX 6331 supplied by Dong Bo S.M. Co., Ltd #520-36 Gouebob-dong Sang-Gu, Busan, Korea) using a solvent based chloroprene rubber adhesive (8700H supplied by Henkel Technologies Korea, 604-030, 472 Shinpyung-Dong, Saha-Ku, Busan, Korea). The EVA protective layer was then attached to the sole of the shoe insert. The upper materials were then lasted around the shoe insert and attached insole board. Finally, a rubber sole was attached to the insole of the shoe insert using a solvent based polyurethane adhesive (6190S, part number ZY30204093, commercially available from Henkel Technologies Korea, 604-030, 472 Shinpyung-Dong, Saha-Ku, Busan, Korea) to complete the shoe construction.

Selected shoes were then tested for water vapor permeability (breathability) using the Whole Boot Water Vapor Permeability test method outlined above in the whole boot moisture vapor transmission rate test. The average water vapor permeability was determined to be 3.5 g/hr.

The selected shoes were then tested for waterproofness according to the Centrifuge Test for Waterproofness described above. The selected footwear met the waterproofness standard, showing no water leaks after 30 min.

Basic hand assessment of the surface characteristics of the inner shoe to assess the degree of the fit of the shoe insert showed that no folds, wrinkles or seams were present to compromise comfort fit characteristics of the shoes.

## Comparative Example 4

Women's casual shoes were made with natural split suede leather upper materials suitable for a casual shoe (part number JS120130501, commercially available from J. S. IND Co., Ltd. #1086-9, Janglim-Dong, Saha-Ku, Busan, Korea). The upper materials were stitched together to form the upper of the casual shoes. A 0.6 mm toe puff (part number TFL060, commercially available from Han Young Industry Co., Ltd, #394-5 Samrak-dong Sasang-Gu, Busan, Korea) and a 1.7 mm leather board heel counter (supplied by Young Poly Chemical Co. Ltd. #907-7 Manduck 3-dong Buk-Gu, Busan, Korea) were then attached to the upper of the shoe.

A shoe insert made of a laminate of expanded polytetrafluoroethylene and a textile (part number VISI001001B, commercially available from W.L. Gore and Associates Inc., Elkton, MD). The laminate was cut and stitched together to form a shoe insert having the size and shape of a 230 size casual shoe last. GORE-SEAM® tape (commercially available from W.L. Gore and Associates Inc., Elkton, MD) was then applied to the stitched seams to form a waterproof seam over the stitched seams of the shoe insert. The shoe insert was then placed on the 230 size casual shoe last which formed a reasonable fit around the last, although wrinkles and excess material were observed.

The liner was removed from the casual shoe last and attached to the leather upper materials of the casual shoe by stitching the liner to the collar portion of the upper. The upper materials and stitched liner were then repositioned onto the 230 size casual shoe last and a solvent based chloroprene rubber adhesive was placed on the heel and toe areas (8250 supplied by Henkel Technologies Korea, 604-030, 472 Shinpyung-Dong, Saha-Ku, Busan, Korea) and sole area (8700H supplied by Henkel Technologies Korea, 604-030, 472 Shinpyung-Dong, Saha-Ku, Busan, Korea).

A protective EVA layer (2.0 mm, hardness 55 supplied by Dong Bo S.M. Co., Ltd #520-36 Gouebob-dong Sang-Gu, Busan, Korea) was adhered to the insole board (A TEX 6331 supplied by Dong Bo S.M. Co., Ltd #520-36 Gouebob-dong Sang-Gu, Busan, Korea) using the solvent based chloroprene rubber adhesive (8700H supplied by Henkel Technologies Korea, 604-030, 472 Shinpyung-Dong, Saha-Ku, Busan, Korea). The EVA protective layer was then attached to the sole of the shoe insert. The upper materials were then lasted around the shoe insert and attached insole board. Finally, a rubber sole was attached to the insole of the shoe insert using a solvent based polyurethane adhesive (6190S, part number ZY30204093), commercially available from Henkel Technologies Korea, 604-030, 472 Shinpyung-Dong, Saha-Ku, Busan, Korea) to complete the shoe construction.

Selected shoes were then tested for water vapor permeability (breathability) using the Whole Boot Water Vapor Permeability test method outlined above in the whole boot moisture vapor transmission rate test. The average water vapor permeability was determined to be 3.6 g/hr.

The selected shoes were then tested for waterproofness according to the Centrifuge Test for Waterproofness described above. The selected footwear met the waterproofness standard showing, no water leaks after 30 min.

Basic hand assessment of the surface characteristics of the inner shoe to assess the degree of fit of the shoe insert showed that significant folds, wrinkles

and seams were present, especially in the toe areas that would be expected to compromise comfort fit characteristics of the shoes.

## Example 8

A symmetrical nylon foot last was fixed onto a clamp which can be rotated through an angle of approximately 140° using a pneumatic cylinder. A polyurethane adhesive web (UT8, 20 g/m$^2$ polyurethane non-woven hot melt adhesive obtained from Protechnic, 41 Avenue Montaigne, F-68700, Cernay, France) was applied to one side of a commercially available men's dress sock of 65% spun silk and 35% polyamide (Windsor Collection Dress Sock Large available through Amazon.com) using a heat press set at 130° C and effective pressure of 34 psi. It was noted that the sock construction had heel and toe areas reinforced with additional, thicker material. In addition to the heel and toe reinforcement, the sock had an angled heel which produced a more foot-like shape. The sock with the polyurethane adhesive web thereon was positioned tightly over the last. The sock was applied to the last with the adhesive web exposed on the outer surface of the last. Care was taken when applying the sock to the last to avoid wrinkles.

A portion of the expanded PTFE tape produced in Example 1 having a length of approximately 1 meter and a width of approximately 7.4 cm was obtained and fixed in a frame by placing the tape edges between six toggle clamps positioned along each tape edge and compressing the PTFE tape between two rubber seals. To ensure that the width of the tape remained fixed, each tape edge and clamp assembly was fixed to the frame using locking nuts. The secured tape in the frame had a width of 6.9 cm. The PTFE tape fixed in the frame was then heated using an industrial air heater for approximately 20 seconds during which the tape reached a temperature of 40-50° C. The locking nuts were then released and the edges of the tape were slowly, manually moved apart slowly in the width direction until the tape was expanded to a width of 37.1 cm. To prevent shrink back of the tape and to maintain the tape width, the frame edges were then secured again using the locking nuts.

After the tape was expanded in the width direction and secured using the locking nuts, the tape was then heated using the industrial hand held air heater, during which the tape reached a temperature of approximately 70° C.

The frame containing the expanded PTFE tape was then removed from the heat and positioned above the symmetrical last. The pneumatic cylinder was then activated to allow the symmetrical last having thereon the sock and adhesive to rotate upwardly at an angle of 90° to penetrate and deform the preheated PTFE tape around the last. The final deformation of the tape was completed by hand to ensure that the tape was deformed closely to the shape of the last and to minimize wrinkles.

A second commercially available commercially available men's dress sock of 65% spun silk and 35% polyamide (Windsor Collection Dress Sock Large available through Amazon.com) having thereon a polyurethane adhesive web (UT8, 20 g/m$^2$ polyurethane non-woven hot melt adhesive obtained from Protechnic, 41 Avenue Montaigne, F-68700, Cernay, France) was then placed over the deformed PTFE tape with the polyurethane adhesive positioned in direct contact with the surface of the deformed expanded PTFE. Care was taken to minimize wrinkling of the PTFE tape and the sock.

The 3-layer article (sock/deformed expanded PTFE tape/sock) was then secured at the collar of the last using an elastomeric retaining band to prevent further movement. The complete assembly of the 3-layer article and nylon last was then placed in an oven set at 140° C for a time of 30 min. During this thermal dwell, the last reached an approximate temperature of 110° C. The assembly was then removed and a vacuum bag was quickly applied over the assembly. A vacuum was applied at 27 inches Hg until the assembly had cooled to approximately 50° C to ensure good contact between the three layers and subsequent adhesive bonding between the socks and expanded PTFE tape layer. The vacuum was then removed from the assembly. The vacuum bag and elastomeric retaining band were then removed from the last and the completed 3-layer bootie was slowly removed from the last.

The 3-layer bootie was then tested for water vapor permeability (breathability) using the Whole Boot Water Vapor Permeability test method outlined above in the moisture vapor transmission rate. The average water vapor permeability was determined to be 16.5 g/hr.

The 3-layer shoe insert was then tested for waterproofness according to the Modified Centrifuge Test for waterproofness described above. The selected footwear met the waterproofness standard, showing no water leaks after 60 min.

## Example 9

A 3-layer bootie was prepared as outlined above in Example 8 and then thermally formed by loosely placing the bootie onto a men's 265 size running shoe last and then placing the bootie in an air circulating oven at 140° C for 30 min. During this thermal dwell, the liner closely formed to the shape and size of the last, forming a smooth and close fitting shoe insert to that of the running show last, particularly in the heel area up to the ankle height of the shoe. Figure 9 is a schematic illustration depicting the shoe insert (dotted lines) on the running shoe last after the shoe insert was shaped. The last was removed from the oven and allowed to cool to less than 50° C, after which the liner was removed from the last.

The 3-layer bootie was tested for water vapor permeability (breathability) using the Whole Boot Water Vapor Permeability test method outlined above in the moisture vapor transmission rate test and with the expanded membrane layer being exposed on the upper surface. The average water vapor permeability was determined to be 19.6 g/hr.

The 3-layer bootie was then tested for waterproofness according to the Modified Centrifuge Test for Waterproofness described above. The selected footwear met the waterproofness standard showing no water leaks after 60 min.

### Example 10

A symmetrical aluminum foot last was fixed onto a clamp which can be rotated through an angle of approximately 140° using a pneumatic cylinder. An expanded PTFE tape made generally in accordance with the teachings set forth in U.S. Patent No. 7,306,729 to Bacino, et al. having a length of approximately 1 meter and a width of approximately 7.4 cm was fixed in a frame by placing the edges of the tape between six toggle clamps positioned along the tape edges and compressing the tape between two rubber seals. To ensure that the width of the tape remained fixed, the tape edges and clamp assembly were fixed to the frame using locking nuts. The secured tape in the frame had a width of 6.9 cm.

The tape fixed in the frame was then heated using an industrial air heater for approximately 20 seconds during which the tape reached a temperature of 40-50° C. The locking nuts were then released and the edges of the tape were slowly manually moved apart in the width direction until the tape was expanded to a width of 37.1cm. To prevent shrink back of the tape and to maintain the tape width, the frame edges were again secured using the locking nuts. After the tape was expanded in the width direction and secured using the locking nuts, the ePTFE tape was heated using the industrial air heater during which the tape reached a temperature of approximately 70° C.

The frame containing the ePTFE tape was then removed from the heat and positioned above the symmetrical last. The pneumatic cylinder was then activated to allow the symmetrical to rotate upwardly at an angle of 90° to penetrate and deform the preheated PTFE tape around the last. The final deformation of the tape over the last was completed by hand to ensure that the tape was deformed closely to the shape of the last and to minimize wrinkles.

The symmetrical last and deformed expanded PTFE were then placed in an oven at 365° C for 20 minutes to ensure that the expanded PTFE was "amorphously-locked". The complete assembly was then removed from the oven and left to cool to room temperature.

After cooling, a polyurethane adhesive web (UT8, 20 g/m² polyurethane non-woven hot melt adhesive obtained from Protechnic, 41 Avenue Montaigne, F-68700, Cernay, France) was applied to one side of a commercially available men's black sock of 60 den (66 dtex) 61% polyamide, 37% cotton and 2% elastane (Sockchen Naturelle 60 commercially available from Nur Die GmbH, Rheine, Germany) using a heat press set at 130° C and effective pressure of 5 psi. The sock with the polyurethane adhesive web thereon was positioned tightly over the last with the adhesive web in direct contact with the ePTFE surface. Care was taken when applying the sock to the last to avoid wrinkles.

The 2-layer article (sock-deformed expanded PTFE) was then secured at the collar of the last using an elastomeric retaining band to prevent further movement. The complete assembly of the 2-layer article and aluminum last was then placed in an oven set at 140° C for 45 min. The assembly was then removed and a vacuum bag was quickly applied over the assembly. A vacuum was applied at 27 inches Hg until the assembly had cooled to approximately 50° C to ensure good contact between the layers and bonding between the sock and ePTFE layer. The vacuum was then removed from the assembly. The vacuum bag and elastomeric retaining band were removed from the last. Finally, the completed 2-layer bootie was slowly and carefully removed from the last.

### Example 11

A symmetrical nylon foot last was fixed onto a clamp which can be rotated through an angle of approximately 140° using a pneumatic cylinder. A polyurethane adhesive web (UT8, 20 g/m² polyurethane non-woven hot melt adhesive obtained from Protechnic, 41 Avenue Montaigne, F-68700, Cernay, France) was applied to one side of a commercially available 60 den (66 dtex) 61% polyamide, 37% cotton and 2% elastane black sock (Sockchen Naturelle 60 commercially available from Nur Die GmbH, Rheine, Germany) using a heat press set at 130° C and effective pressure of 5 psi. The sock was applied to a symmetrical last with the adhesive web exposed on the outer surface of the symmetrical last. Care was taken when applying the sock to the last to avoid wrinkles.

A fine powder of PTFE polymer (Daiken Industries, Ltd., Orangeburg, N.Y.) was blended with Isopar® K (Exxon Mobil Corp., Fairfax, VA) in the proportion of 0.196 g/g of fine powder. The lubricated powder was compressed in a cylinder to form a pellet and placed into an oven set at 70° C for approximately 12 hours. Compressed and heated pellets were ram extruded to produce tapes approximately 15.2 cm wide by 0.73 mm thick. Three separate rolls of tape were produced and layered together between compression rolls to a thickness of 0.76 cm. The tape was then transversely stretched to 56 cm (*i.e.,* at a ratio of 3.7:1), restrained, and then dried in an oven set at 270° C. The dry tape was longitudinally expanded between banks of rolls over a heated plate set to a temperature of 340° C. The speed ratio between the second bank of rolls and the first bank of rolls, and hence the expansion ratio, was 8:1.

A portion of the expanded PTFE tape having a length of approximately 1 meter and a width of approximately 12.5 cm was fixed in a frame by placing the tape edges between six toggle clamps positioned along each tape edge and compressing the tape between two rubber seals. To ensure that the width remained fixed, the tape edges and the clamp assembly were fixed to the frame using locking nuts. The secured tape in the frame had a width of 9 cm.

The tape fixed in the frame was then heated using an industrial air heater for approximately 20 seconds, during which the tape reached a temperature of 40-50° C. The locking nuts were then released and the edges of the tape were slowly, manually moved apart in the width direction until the tape was expanded to a width of 27cm. To prevent shrink back of the tape and to maintain the 27 cm tape width, the frame edges were again secured using the locking nuts.

After the tape was expanded in the width direction and secured using the locking nuts, the tape was then heated using the industrial air heater, during which the tape reached a temperature of approximately 70° C. The pneumatic cylinder was then activated to allow the symmetrical last having thereon the sock and adhesive to rotate upwardly at an angle of 90° to penetrate and deform the preheated PTFE tape around the last. The final deformation of the tape over the last was completed by hand to ensure that the tape deformed closely to the shape of the last and to minimize wrinkles.

A second sock (60 den (66 dtex) 61% polyamide, 37% cotton and 2% elastane black sock (Sockchen Naturelle 60 commercially available from Nur Die GmbH, Rheine, Germany) having thereon a polyurethane adhesive web was then placed over the deformed tape with the adhesive positioned in direct contact with the surface of the deformed expanded PTFE tape. Care was taken when applying the sock to minimize wrinkling.

The 3-layer article (sock/deformed expanded PTFE tape/sock) was then secured at the collar of the last using an elastomeric retaining band to prevent further movement. The complete assembly of the 3-layer article and nylon last was then placed in an oven at 150° C for 30 min. During this thermal dwell, the last reached an approximate temperature of 120° C. The assembly was then removed and a vacuum bag was quickly applied over the assembly. A vacuum was applied (at 27 inches Hg) until the assembly had cooled to approximately 50 °C to ensure good contact between the layers and subsequent adhesive bonding between the socks and expanded PTFE layer. The vacuum was then removed from the assembly and the vacuum bag removed. The elastomeric retaining band was removed from the last and the completed sock is slowly removed from the last. The sock has a high degree of elasticity and can be subsequently stretched to form a close fitting sock over a broad range of last sizes, such as, for example, a ladies medium (*e.g.* EU size 240) to a men's large (*e.g.,* EU size 275).

The sock was then tested for water vapor permeability (breathability) using the Sock Water Vapor Permeability test method outlined above. The average sock water vapor permeability was determined to be 26.4 g/hr.

When the sock was placed in a running shoe, the water vapor permeability of the shoe and sock was determined to be 11.7 g/hr.

Selected shoes were then tested for waterproofness according to the Centrifuge Test for Waterproofness described above. The selected footwear met the waterproofness standard, showing no water leaks after 60 min.

**Comparative Example 5**

A 275 sized shoe insert made of a laminate of expanded polytetrafluoroethylene and a textile (part number VISI001001B, commercially available from W.L. Gore and Associates Inc., Elkton, MD) was produced utilizing conventional means. Specifically, the laminate was cut and stitched together to form the 275 sized sock insert. GORE-SEAM® tape (commercially available from W.L. Gore and Associates Inc., Elkton, MD) was then applied to the stitched seams to form a waterproof seam over the stitched seams of the insert. The sock insert was then tested for water vapor permeability (breathability) using the Sock Water Vapor Permeability test method outlined above. The average sock insert water vapor permeability was determined to be 17.7 g/hr.

The sock was then tested for waterproofness according to the Centrifuge Test for Waterproofness described above. The sock met the waterproofness standard, showing no water leaks after 60 min.

**Comparative Example 6**

For comparative water vapor transmission rate and waterproofness testing, a commercially available large size waterproof and breathable sock was obtained (Seal Skinz Thin Socklet from Seal Skinz Ltd, 36 Oldmedow Road, Norfolk, PE30 3PP, United Kingdom).

The sock was tested for water vapor permeability (breathability) using the test method outlined above in the sock moisture vapor transmission rate test. The average sock water vapor permeability was determined at 11.8 g/hr. When the sock was placed in a running shoe, the water vapor permeability of the shoe and sock was determined to be 6.6 g/hr.

The sock was then tested for waterproofness according to the Centrifuge Test for Waterproofness described above. The sock did not meet the waterproofness standard showing water leaks after 15 minutes.

The invention of this application has been described above both generically and with regard to specific embodiments. Although the invention has been set forth in what is believed to be the preferred embodiments, a wide variety of alternatives known to those of skill in the art can be selected within the generic disclosure. The invention is not otherwise limited, except for the recitation of the claims set forth below.

**Claims**

1. A waterproof, breathable sock comprising:

    a seamless conformed or shaped expanded polytetrafluoroethylene (ePTFE) membrane having a first side and a second side and being made from a seamless conformed expanded polytetrafluoroethylene (ePTFE) tape which is elongated to conform to the shape of a three dimensional object without fracturing, tearing, or otherwise breaking; and
    a first elastic textile affixed to said first side of said ePTFE membrane, said first elastic textile having an elasticity of at least about 50%, wherein said seamless conformed ePTFE membrane and said first elastic textile form a first laminate.

2. The waterproof, breathable sock of claim 1, further comprising a second elastic textile affixed to said second side of said ePTFE membrane, said second elastic textile having an elasticity of at least about 50%, wherein said ePTFE membrane, said first elastic textile, and said second elastic textile form a second laminate.

3. The waterproof, breathable sock of claim 1 and 2, wherein said first and second elastic textiles are selected from a knitted textile tube, a woven textile tube a tubular sock and a formed sock.

4. The waterproof, breathable sock of any of claims 1 to 3, further comprising an adhesive positioned on at least one of said ePTFE membrane, said first elastic textile and said second textile; said adhesive being a discontinuous adhesive or a continuous breathable adhesive.

5. The waterproof, breathable sock of any of claims 1 to 4, wherein said ePTFE membrane has a thickness variation from a first location in said sock to a second location in said sock of at least 1.2: 1.

6. The waterproof, breathable sock of any of claims 1 to 5, wherein at least one of said ePTFE membrane, said first elastic textile, and said second elastic textile has at least one additional layer thereon; wherein said at least one additional layer is any of an abrasion resistant coating; an oleophobic coating, and a polymeric overlay.

7. The waterproof, breathable sock of any of claims 1 to 6, wherein said sock is breathable.

8. The waterproof, breathable sock of any of claims 1 to 7, wherein said sock has a generally symmetrical shape.

9. The waterproof, breathable sock of any of claims 1 to 7, wherein said sock has a generally asymmetrical shape.

10. The waterproof, breathable sock of any of claims 1 to 9, wherein said sock does not demonstrate leaking when said sock is subjected to the Sock Centrifuge Waterproofness Test as described herein.

11. The waterproof, breathable sock of any of claims 1 to 10, wherein said ePTFE membrane has a density greater than or equal to about 2.0 g/cm$^3$.

12. The waterproof, breathable sock of any of claims 1 to 11, wherein said ePTFE membrane is amorphously locked.

13. The waterproof, breathable sock of any of claims 1 to 12, wherein said sock has a moisture vapor transmission rate of at least 3 g/hr.

14. The waterproof, breathable sock of any of claims 1 to 13, further comprising at least one second component attached to said first laminate or a portion thereof, and/or attached to said second laminate or a portion thereof.

15. The waterproof, breathable sock of claim 14, wherein said at least one second component creates regions within said sock, at least one of said regions possessing a function or feature different from another said region; wherein said at least second component particularly is selected from the group consisting of a textile, a laminate, a textile laminate, a polymer membrane and a second ePTFE membrane different from said conformed ePTFE membrane.

16. The waterproof, breathable sock of any of claims 1 to 15, wherein a portion of either said first laminate and said second laminate is removed and said portion is affixed to at least one second component.

17. The waterproof, breathable sock according to any of claims 1 to 16, further comprising an integrally joined interface formed by joining or attaching the conformed ePTFE membrane to itself when the conformed ePTFE membrane has been folded, cut, torn, split, punctured, or otherwise damaged.

**Patentansprüche**

1. Wasserdichte, atmungsaktive Socke, aufweisend:

    eine nahtlose angepasste oder geformte Membran aus expandiertem Polytetrafluorethylen (ePTFE) mit einer ersten Seite und einer zweiten Seite, die aus einem nahtlosen angepassten expandierten Polytetrafluorethylen-(ePTFE-) Band gebildet ist, das gestreckt ist, um sich an die Form eines dreidimensionalen Objekts ohne Brechen, Reißen oder anderweitigen Bruch anzupassen; und

ein erstes elastisches Textil, das auf der ersten Seite der ePTFE-Membran anbgebracht ist, wobei das erste elastische Textil eine Elastizität von mindestens 50 % aufweist,

wobei die nahtlose angepasste ePTFE-Membran und das erste elastische Textil ein erstes Laminat bilden.

2. Wasserdichte, atmungsaktive Socke nach Anspruch 1,

die ferner ein zweites elastisches Textil aufweist, das auf der zweiten Seite der ePTFE-Membran angebracht ist, wobei das zweite elastische Textil eine Elastizität von mindestens 50 % aufweist, wobei die ePTFE-Membran, das erste elastische Textil und das zweite elastische Textil ein zweites Laminat bilden.

3. Wasserdichte, atmungsaktive Socke nach Anspruch 1 und 2,

wobei das erste und das zweite elastische Textil ausgewählt sind aus einem gewirkten Textilschlauch, einem gewebten Textilschlauch, einer schlauchförmigen Socke und einer geformten Socke.

4. Wasserdichte, atmungsaktive Socke nach einem der Ansprüche 1 bis 3,

die ferner einen Klebstoff aufweist, der auf mindestens einem von der ePTFE-Membran, dem ersten elastischen Textil und dem zweiten elastischen Textil angeordnet ist; wobei es sich bei dem Klebstoff um einen diskontinuierlichen oder einen kontinuierlichen atmungsaktiven Klebstoff handelt.

5. Wasserdichte, atmungsaktive Socke nach einem der Ansprüche 1 bis 4, wobei die ePTFE-Membran eine Dickenvariation von einer ersten Stelle in der Socke zu einer zweiten Stelle in der Socke von mindestens 1,2:1 aufweist.

6. Wasserdichte, atmungsaktive Socke nach einem der Ansprüche 1 bis 5, wobei mindestens eines von der ePTFE-Membran, dem ersten elastischen Textil und dem zweiten elastischen Textil mindestens eine zusätzliche Schicht darauf aufweist; wobei die mindestens eine zusätzliche Schicht in beliebiger Weise eines von einer abriebfesten Beschichtung, einer oleophoben Beschichtung und einer polymeren Auflage ist.

7. Wasserdichte, atmungsaktive Socke nach einem der Ansprüche 1 bis 6, wobei die Socke atmungsaktiv ist.

8. Wasserdichte, atmungsaktive Socke nach einem der Ansprüche 1 bis 7, wobei die Socke eine allgemein symmetrische Form aufweist.

9. Wasserdichte, atmungsaktive Socke nach einem der Ansprüche 1 bis 7, wobei die Socke eine allgemein asymmetrische Form aufweist.

10. Wasserdichte, atmungsaktive Socke nach einem der Ansprüche 1 bis 9, wobei die Socke keine Leckage zeigt, wenn die Socke dem Socken-Zentrifugen-Wasserdichtheitstest unterzogen wird, wie er hierin beschrieben ist.

11. Wasserdichte, atmungsaktive Socke nach einem der Ansprüche 1 bis 10, wobei die ePTFE-Membran eine Dichte von größer als oder gleich etwa $2,0 \text{ g/cm}^3$ aufweist.

12. Wasserdichte, atmungsaktive Socke nach einem der Ansprüche 1 bis 11, wobei die ePTFE-Membran amorph verschlossen ist.

13. Wasserdichte, atmungsaktive Socke nach einem der Ansprüche 1 bis 12, wobei die Socke eine Wasserdampfdurchlässigkeitsrate von mindestens 3 g/h aufweist.

14. Wasserdichte, atmungsaktive Socke nach einem der Ansprüche 1 bis 13, die ferner mindestens eine zweite Komponente aufweist, die an dem ersten Laminat oder einem Teil davon angebracht ist und/oder an dem zweiten Laminat oder einem Teil davon angebracht ist.

15. Wasserdichte, atmungsaktive Socke nach Anspruch 14,

wobei die mindestens eine zweite Komponente Regionen in der Socke erzeugt, wobei mindestens eine der Regionen eine Funktion oder ein Merkmal aufweist, die bzw. das sich von einer anderen Region unterscheidet; wobei die mindestens eine zweite Komponente im Spezielleren aus der Gruppe ausgewählt ist bestehend aus einem Textil, einem Laminat, einem Textillaminat, einer Polymermembran sowie einer zweiten ePTFE-Membran, die von der angepassten ePTFE-Membran verschieden ist.

16. Wasserdichte, atmungsaktive Socke nach einem der Ansprüche 1 bis 15, wobei ein Teil sowohl des ersten Laminats als auch des zweiten Laminats entfernt ist und der Teil an mindestens einer zweiten Komponente angebracht ist.

17. Wasserdichte, atmungsaktive Socke nach einem der Ansprüche 1 bis 16, die ferner eine integral verbundene Grenzfläche aufweist, die durch Verbinden oder Befestigen der angepassten ePTFE-Membran mit bzw. an sich selbst gebildet ist, wenn die angepasste ePTFE-Membran gefaltet, zerschnitten, zerrissen, getrennt, durchstoßen oder anderweitig beschädigt worden ist.

## Revendications

1. Chaussette étanche à l'eau, perméable à l'air comprenant :

   une membrane en polytétrafluoréthylène expansé (ePTFE) façonnée ou mise en forme sans couture, possédant un premier côté et un second côté, et réalisée à partir d'un ruban en polytétrafluoréthylène expansé (ePTFE) mise en forme sans couture, qui est allongé pour épouser la configuration d'un objet en trois dimensions sans se fracturer, se déchirer ou se rompre d'une autre manière ; et
   un premier textile élastique fixé audit premier côté de ladite membrane en ePTFE, ledit premier textile élastique possédant une élasticité s'élevant à au moins environ 50 % ;
   dans laquelle ladite membrane en ePTFE mise en forme sans couture et ledit premier textile élastique forment un premier stratifié.

2. Chaussette étanche à l'eau, perméable à l'air, selon la revendication 1, comprenant en outre un second textile élastique fixé audit second côté de ladite membrane en ePTFE, ledit second textile élastique possédant une élasticité s'élevant à au moins environ 50 % ; dans laquelle ladite membrane en ePTFE, ledit premier textile élastique et ledit second textile élastique forment un second stratifié.

3. Chaussette étanche à l'eau, perméable à l'air, selon la revendication 1 ou 2, dans laquelle lesdits premier et second textiles élastiques sont choisis parmi un tube en textile tricoté, un tube en textile tissé, une chaussette tubulaire et une chaussette façonnée.

4. Chaussette étanche à l'eau, perméable à l'air, selon l'une quelconque des revendications 1 à 3, comprenant en outre un adhésif disposé sur au moins un élément choisi parmi ladite membrane en ePTFE, ledit premier textile élastique et ledit second textile, ledit adhésif représentant un adhésif discontinu ou un adhésif continu perméable à l'air.

5. Chaussette étanche à l'eau, perméable à l'air, selon l'une quelconque des revendications 1 à 4, dans laquelle ladite membrane en ePTFE possède une variation en épaisseur, à partir d'un premier endroit dans ladite chaussette jusqu'à un second endroit dans ladite chaussette s'élevant à au moins 1,2 : 1.

6. Chaussette étanche à l'eau, perméable à l'air, selon l'une quelconque des revendications 1 à 5, dans laquelle au moins un élément choisi parmi ladite membrane en ePTFE, ledit premier textile élastique et ledit second textile possède au moins une couche supplémentaire disposée par-dessus ; dans laquelle ladite au moins une couche supplémentaire représente n'importe quel élément choisi parmi un revêtement résistant à l'abrasion, un revêtement oléophobe et un recouvrement polymère.

7. Chaussette étanche à l'eau, perméable à l'air, selon l'une quelconque des revendications 1 à 6, dans laquelle ladite chaussette est perméable à l'air.

8. Chaussette étanche à l'eau, perméable à l'air, selon l'une quelconque des revendications 1 à 7, dans laquelle ladite chaussette possède une configuration généralement symétrique.

9. Chaussette étanche à l'eau, perméable à l'air, selon l'une quelconque des revendications 1 à 7, dans laquelle ladite chaussette possède une configuration généralement asymétrique.

10. Chaussette étanche à l'eau, perméable à l'air, selon l'une quelconque des revendications 1 à 9, dans laquelle ladite chaussette ne laisse apparaître aucune fuite lorsque ladite chaussette est soumise au test centrifuge d'étanchéité à l'eau pour des chaussettes tel que décrit en l'occurrence.

11. Chaussette étanche à l'eau, perméable à l'air, selon l'une quelconque des revendications 1 à 10, dans laquelle ladite membrane en ePTFE possède une masse volumique supérieure ou égale à environ 2,0 g/cm$^3$.

12. Chaussette étanche à l'eau, perméable à l'air, selon l'une quelconque des revendications 1 à 11, dans laquelle ladite membrane en ePTFE est bloquée par voie amorphe.

13. Chaussette étanche à l'eau, perméable à l'air, selon l'une quelconque des revendications 1 à 12, dans laquelle ladite chaussette possède un taux de transmission de vapeur d'eau s'élevant à au moins 3 g/h.

14. Chaussette étanche à l'eau, perméable à l'air, selon l'une quelconque des revendications 1 à 13, comprenant en outre au moins un second composant fixé audit premier stratifié ou à une portion de ce dernier et/ou fixé audit second stratifié ou à une portion de ce dernier.

15. Chaussette étanche à l'eau, perméable à l'air, selon la revendication 14, dans laquelle ledit au moins un second composant crée des zones au sein de ladite chaussette, au moins une desdites zones possédant une fonction ou une caractéristique différente de celle d'une autre desdites zones ; dans laquelle ledit au moins un second composant est choisi en particulier parmi le groupe constitué par un textile, un stratifié, un stratifié textile, une membrane polymère et une seconde membrane en ePTFE différente de ladite membrane en ePTFE mise en forme.

16. Chaussette étanche à l'eau, perméable à l'air, selon l'une quelconque des revendications 1 à 15, dans laquelle une portion que ce soit dudit premier stratifié ou dudit second stratifié est retirée et ladite portion est fixée à au moins un second composant.

17. Chaussette étanche à l'eau, perméable à l'air, selon l'une quelconque des revendications 1 à 16, comprenant en outre une interface jointe en une seule pièce formée par jonction ou fixation de la membrane en ePTFE mise en forme à elle-même lorsque la membrane en ePTFE mise en forme a été pliée, coupée, déchirée, fendue, perforée ou endommagée d'une autre manière.

# FIGURE 1

# FIGURE 2

# FIGURE 3A

# FIGURE 3B

# FIGURE 4A

## Prior Art

# FIGURE 4B

Prior Art

85

# FIGURE 5

# FIGURE 6

# FIGURE 7

## Prior Art

# FIGURE 8

# FIGURE 9

160

130

150

140

# FIGURE 10

# FIGURE 11

# FIGURE 12

170

2013/11/27    L    x300    300 um

# FIGURE 13

170

2013/11/27    L    x300    300 um

# FIGURE 14

195

190

180

180

180

180

200

185

# FIGURE 15

# FIGURE 16

# FIGURE 17

# FIGURE 18

300

310

# FIGURE 19

# FIGURE 20

330

340

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011167677 A1
- US 7306729 B, Bacino
- US 5708044 A, Branca
- US 6541589 B, Baillie
- US 7531611 B, Sabol
- US 906877 A, Ford
- US 410050 A, Xu
- US 4995296 A, Mortimer, Jr.
- US 5329807 A, Sugar